# EUROPEAN PATENT APPLICATION

(11) **EP 4 727 230 A1**
(43) Date of publication of application: **15.04.2026**
(21) Application number: 23940137.5
(22) Date of filing: 08.06.2023
(51) Int. Cl.: H04W 72/0446, H04L 5/00

(54) **COMMUNICATION METHOD AND APPARATUS**

(71) Applicant: Huawei Technologies Co., Ltd., Shenzhen, Guangdong 518129 (CN)
(72) Inventor: WANG, Ting, Shenzhen, Guangdong 518129 (CN); TANG, Hao, Shenzhen, Guangdong 518129 (CN); MA, Jianglei, Shenzhen, Guangdong 518129 (CN)
(74) Representative: Maiwald GmbH
(86) International application number: PCT/CN2023/099241
(87) International publication number: WO 2024/250251

(57) **Abstract**

A communication method and apparatus are provided, to reduce a transmission latency. The method includes: determining an information block and performing communication based on the information block. The information block includes at least two of the following: a first reference signal, a first control channel, a first data channel, a second reference signal, or a second control channel. The first reference signal is used to determine detection time of the first control channel, the first control channel is used to schedule the first data channel, the second reference signal is used to demodulate the first data channel, and the second control channel is used to feed back whether the first data channel is successfully received. A start time domain position of the information block is located at any position in a time unit in a first frame structure, or is located at a boundary of a time unit in a second frame structure. The first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

## Description

### TECHNICAL FIELD

Embodiments of this application relate to the communication field, and in particular, to a communication method and apparatus.

### BACKGROUND

Ultra-reliability low-latency communication (ultra-reliability low-latency communication, URLLC) is one of three major application scenarios of a 5^{th} generation (5^{th} generation, 5G) mobile communication system. As a breakthrough for the mobile communication industry to enter vertical industries, the URLLC is quite critical to wide application in fields such as self-driving, industrial manufacturing, internet of vehicles, and smart grid.

A most significant feature of the URLLC scenario is low latency and high reliability. URLLC is widely used, and different application scenarios have different requirements on latency, reliability, and bandwidth. For example, application scenarios of the URLLC include at least a power automation "telemetry, remote communication, and remote control" scenario, an internet of vehicles scenario, and an industrial manufacturing scenario. Requirements for a low latency and high reliability in the industrial manufacturing scenario are the most challenging.

However, based on a current transmission mechanism, low-latency requirements in some scenarios may not be met.

### SUMMARY

Embodiments of this application provide a communication method and apparatus, to implement flexible transmission and reduce a transmission latency.

According to a first aspect, a communication method is provided. The method may be performed by a communication apparatus, may be performed by a part of a communication apparatus, for example, a processor, a chip, a chip system, or the like of the communication apparatus, or may be implemented by a logic module or software that can implement all or a part of functions of a communication apparatus. The communication apparatus may be a first communication apparatus or a second communication apparatus. The method includes:
determining an information block, where the information block includes at least two of the following: a first reference signal, a first control channel, a first data channel, a second reference signal, or a second control channel, the first reference signal is used to determine detection time of the first control channel, the first control channel is used to schedule the first data channel, the second reference signal is used to demodulate the first data channel, and the second control channel is used to feed back whether the first data channel is successfully received; and performing communication based on the information block, where a start time domain position of the information block is located at any position in a time unit in a first frame structure, or a start time domain position of the information block is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

According to this solution, because the start time domain position of the information block may be located at any position in the time unit in the first frame structure, the communication apparatus can immediately perform communication based on the information block after preparation is completed, without waiting for a boundary of the time unit in the first frame structure to arrive. Therefore, a transmission moment can be flexibly determined, waiting time in a transmission process can be reduced, a transmission latency can be reduced, and communication performance can be improved. Alternatively, the start time domain position of the information block may be located at the boundary of the time unit in the second frame structure. The second subcarrier spacing is greater than the first subcarrier spacing, and a length of the time unit in the second frame structure is less than a length of the time unit in the first frame structure. Therefore, in comparison with alignment with the boundary of the time unit in the first frame structure, the start time domain position of the information block being aligned with the boundary of the time unit in the second frame structure requires shorter waiting time. In this way, the communication apparatus can flexibly determine a transmission moment, waiting time in a transmission process can be reduced, and a transmission latency can be reduced.

In a possible design, a frequency domain resource of the first reference signal, a frequency domain resource of the first control channel, and a frequency domain resource of the first data channel are the same. Alternatively, a frequency domain resource of the first reference signal, a frequency domain resource of the first control channel, a frequency domain resource of the first data channel, and a frequency domain resource of the second control channel are the same.

Based on the possible design, because the frequency domain resource of the first reference signal, the frequency domain resource of the first control channel, the frequency domain resource of the first data channel, and the frequency domain resource of the second control channel are the same, a transmit apparatus and a receive apparatus do not need to switch a frequency band of a transceiver in a communication process. This reduces communication complexity.

In a possible design, a time domain resource of the first control channel and a time domain resource of the first data channel are consecutive. Alternatively, a time domain resource of the first control channel and a time domain resource of the second reference signal are consecutive, and the time domain resource of the second reference signal and a time domain resource of the first data channel are consecutive.

Based on the possible design, when the time domain resource of the first control channel and the time domain resource of the first data channel are consecutive, the transmit apparatus may immediately send the first control channel after sending the first reference signal, to schedule the first data channel. This reduces a scheduling latency.

In a possible design, a frequency domain resource of the first reference signal includes a frequency domain resource of the first control channel and a frequency domain resource of the first data channel. Alternatively, a frequency domain resource of the first reference signal is the same as a frequency domain resource of the first control channel.

In a possible design, a time domain resource of the first control channel is the same as a time domain resource of the first data channel. Alternatively, a time domain resource of the first data channel includes a time domain resource of the first control channel.

Based on the possible design, the time domain resource of the first control channel is the same as the time domain resource of the first data channel, so that a receive end apparatus can receive the first data channel while receiving the first control channel. This shortens a latency between the first data channel and the first control channel, and further reduces a data transmission latency.

In a possible design, a start time domain position of the first reference signal is the same as the start time domain position of the information block, and/or a time domain resource of the first reference signal and the time domain resource of the first control channel are consecutive.

Based on the possible design, because the start time domain position of the first reference signal is the same as the start time domain position of the information block, the start time domain position of the information block can be determined after the start time domain position of the first reference signal is determined. In addition, because a reference signal is usually a simple signal, for example, a ZC sequence, the receive apparatus may determine the start time domain position of the first reference signal and the start time domain position of the information block by detecting the first reference signal. In other words, the start time domain position of the information block may be determined through blind detection. This reduces detection complexity of the receive apparatus.

In a possible design, a time interval between the second control channel and the first data channel is greater than or equal to first duration, and the first duration is minimum processing duration corresponding to a processing capability of the receive apparatus.

Based on the possible design, when the time interval between the second control channel and the first data channel is equal to the first duration, the receive apparatus may immediately send the second control channel after processing is completed, to feed back whether the first data channel is successfully received. This reduces feedback waiting time, that is, reduces a feedback latency, and further reduces a communication latency.

In a possible design, there is a correspondence between a parameter of the first reference signal and the information block. The parameter of the first reference signal includes at least one of the following: a time-frequency resource position of the first reference signal, a scrambling identifier of the first reference signal, or a root value of a reference sequence, where the reference sequence is used to generate the first reference signal, and the root value of the reference sequence is used to determine the reference sequence.

Based on the possible design, a structure of the information block may be determined based on the parameter of the first reference signal, to determine positions of channels, so that the receive apparatus can receive a channel or a signal at an appropriate time-frequency position. This improves receiving performance.

According to a second aspect, a communication method is provided. The method may be performed by a first communication apparatus, may be performed by a part of a first communication apparatus, for example, a processor, a chip, a chip system, or the like of the first communication apparatus, or may be implemented by a logic module or software that can implement all or a part of functions of a first communication apparatus. The method includes: determining a first channel, where the first channel is a first control channel or a first data channel, and the first control channel is used to schedule the first data channel; and sending the first channel, where a start time domain position of the first channel is located at any position in a time unit in a first frame structure, or a start time domain position of the first channel is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

According to this solution, because the start time domain position of the first channel may be located at any position in the time unit in the first frame structure, the first communication apparatus can immediately send the first channel after preparation is completed, without waiting for a boundary of the time unit in the first frame structure to arrive. Therefore, a transmission moment can be flexibly determined, waiting time in a transmission process can be reduced, a transmission latency can be reduced, and communication performance can be improved. Alternatively, the start time domain position of the first channel may be located at the boundary of the time unit in the second frame structure. The second subcarrier spacing is greater than the first subcarrier spacing, and a length of the time unit in the second frame structure is less than a length of the time unit in the first frame structure. Therefore, in comparison with alignment with the boundary of the time unit in the first frame structure, the start time domain position of the first channel being aligned with the boundary of the time unit in the second frame structure requires shorter waiting time. In this way, the communication apparatus can flexibly determine a transmission moment, waiting time in a transmission process can be reduced, and a transmission latency can be reduced.

In a possible design, the first channel is the first control channel. The method further includes: sending a first signal, where the first signal is used to determine detection time of the first control channel, and a start time domain position of the first signal is located at any position in a time unit in the first frame structure, or a start time domain position of the first signal is located at a boundary of a time unit in the second frame structure.

Based on this possible design, because the start time domain position of the first signal may be located at any position in the time unit in the first frame structure or at the boundary of the time unit in the second frame structure, the first communication apparatus may immediately send the first signal when the first control channel can be sent, so that a second communication apparatus learns that there is subsequent transmission of the first control channel. In addition, the second communication apparatus may start to detect the first control channel at an end time domain position of the first signal, and does not need to continuously detect the first control channel at any moment. This can reduce processing complexity and power consumption overheads of the second communication apparatus.

In a possible design, the first channel is the first data channel, and the method further includes: sending a third control channel, where the third control channel is used to schedule the first data channel.

According to a third aspect, a communication method is provided. The method may be performed by a second communication apparatus, may be performed by a part of a second communication apparatus, for example, a processor, a chip, a chip system, or the like of the second communication apparatus, or may be implemented by a logic module or software that can implement all or a part of functions of a second communication apparatus. The method includes: receiving a first channel, where the first channel is a first control channel or a first data channel, the first control channel is used to schedule the first data channel, a start time domain position of the first channel is located at any position in a time unit in a first frame structure, or a start time domain position of the first channel is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel; and performing communication based on the first channel. For technical effect brought by the third aspect, refer to the technical effect brought by the second aspect. Details are not described herein again.

In a possible design, the first channel is the first control channel. Performing communication based on the first channel includes: receiving the first data channel based on the first control channel.

In a possible design, the first channel is the first control channel. The method further includes: receiving a first signal, where the first signal is used to determine detection time of the first control channel, and a start time domain position of the first signal is located at any position in a time unit in the first frame structure, or a start time domain position of the first signal is located at a boundary of a time unit in the second frame structure. Receiving the first channel includes: receiving the first control channel based on the first signal.

In a possible design, the first channel is the first data channel. Performing communication based on the first channel includes: sending feedback information, where the feedback information is used to feed back whether the first data channel is successfully received.

In a possible design, the first channel is the first data channel, and the method further includes: receiving a third control channel, where the third control channel is used to schedule the first data channel. Receiving the first channel includes: receiving the first data channel based on the third control channel.

With reference to the second aspect or the third aspect, in a possible design, an interval between the end time domain position of the first signal and a start time domain position of the first control channel is 0. Alternatively, the start time domain position of the first control channel is located at a start boundary of a 1^{st} time unit after the first signal, and the 1^{st} time unit is a time unit corresponding to the second subcarrier spacing.

Based on the possible design, when the interval between the end time domain position of the first signal and a start time domain position of the first control channel is 0, the first communication apparatus may send the first control channel immediately after the first signal is sent, without waiting for the boundary of the time unit in the first frame structure. This reduces a transmission latency.

Alternatively, when the start time domain position of the first control channel is located at the start boundary of the 1^{st} time unit that corresponds to the second subcarrier spacing and that is after the first signal, because the second subcarrier spacing is large, duration of the time unit corresponding to the second subcarrier spacing is short. In comparison with alignment with a start boundary of a time unit corresponding to the first subcarrier spacing, this can reduce a waiting latency. In addition, the second communication apparatus may detect the first control channel at the start boundary of the 1^{st} time unit that corresponds to the second subcarrier spacing and that is after the first signal, and does not need to continuously detect the first control channel at any moment. This can reduce processing complexity and power consumption overheads of the second communication apparatus.

With reference to the second aspect or the third aspect, in a possible design, there is a correspondence between a first parameter and a second parameter. The first parameter includes at least one of the following: the first subcarrier spacing, a cyclic prefix length corresponding to the first subcarrier spacing, a time-frequency resource position of the first signal, a scrambling identifier of the first signal, or a root value of a first reference sequence, where the first reference sequence is used to generate the first signal, and the root value of the first reference sequence is used to determine the first reference sequence. The second parameter includes at least one of the following: the second subcarrier spacing, a cyclic prefix length corresponding to the second subcarrier spacing, or a time-frequency resource position of the first control channel.

With reference to the second aspect or the third aspect, in a possible design, a frequency domain resource of the first signal is the same as a frequency domain resource of the first control channel. Alternatively, a center frequency of a frequency domain resource of the first signal is the same as a center frequency of a frequency domain resource of the first control channel. Alternatively, a frequency domain resource of the first signal includes a frequency domain resource of the first control channel.

With reference to the second aspect or the third aspect, in a possible design, an interval between an end time domain position of the third control channel and a start time domain position of the first data channel is 0.

Based on the possible design, the first data channel can be sent immediately after the third control channel is sent, without waiting for the boundary of the time unit in the first frame structure. This reduces a communication latency. In addition, when a start time domain position of the third control channel is located at any moment, the first communication apparatus may immediately send the third control channel when the third control channel can be sent, and send the third control channel to schedule the first data channel, without waiting for the boundary of the time unit in the first frame structure to arrive or waiting for a time unit that is in the first frame structure and that is used for the third control channel to arrive. This further reduces a communication latency.

With reference to the second aspect or the third aspect, in a possible design, the third control channel carries first information. The first information indicates a quantity of time units by which a start time domain position of the first data channel is offset relative to a time domain resource of the third control channel, and the time unit is a time unit corresponding to the first subcarrier or a time unit corresponding to the second subcarrier. Alternatively, the first information indicates duration by which a start time domain position of the first data channel is offset relative to a time domain resource of the third control channel.

According to a fourth aspect, a communication method is provided. The method may be performed by a second communication apparatus, may be performed by a part of a second communication apparatus, for example, a processor, a chip, a chip system, or the like of the second communication apparatus, or may be implemented by a logic module or software that can implement all or a part of functions of a second communication apparatus. The method includes: determining a second signal, where the second signal is used to request to schedule a second data channel, or the second signal indicates transmission of a second data channel; and sending the second signal, where a start time domain position of the second signal is located at any position in a time unit in a third frame structure, or a start time domain position of the second signal is located at a boundary of a time unit in a fourth frame structure, the third frame structure is a frame structure corresponding to a third subcarrier spacing, the fourth frame structure is a frame structure corresponding to a fourth subcarrier spacing, and the fourth subcarrier spacing is greater than the third subcarrier spacing.

Based on this solution, because the start time domain position of the second signal may be located at any position in the time unit in the third frame structure, after data of the second communication apparatus arrives, the second communication apparatus may immediately send the second signal to request to schedule the second data channel or indicate transmission of the second data channel, without waiting for a boundary of the time unit in the third frame structure to arrive. Therefore, a transmission moment can be flexibly determined, a waiting latency in a transmission process can be reduced, and a communication latency can be reduced. Alternatively, the start time domain position of the second signal may be located at the boundary of the time unit in the fourth frame structure. The fourth subcarrier spacing is greater than the third subcarrier spacing, and a length of the time unit in the fourth frame structure is less than a length of the time unit in the third frame structure. Therefore, in comparison with alignment with a boundary of the time unit in the third frame structure, the start time domain position of the second signal being aligned with the boundary of the time unit in the fourth frame structure requires shorter waiting time. In this way, the communication apparatus can flexibly determine a transmission moment, waiting time in a transmission process can be reduced, and a latency can be reduced.

In a possible design, the method further includes: sending the second data channel, where a start time domain position of the second data channel is located at any position in a time unit in the third frame structure, or a start time domain position of the second data channel is located at a boundary of a time unit in the fourth frame structure.

Based on the possible design, because the start time domain position of the second data channel may be located at any position in the time unit in the third frame structure, the second communication apparatus can send the second data channel without waiting for the boundary of the time unit in the third frame structure to arrive. This reduced a waiting latency in a transmission process. Alternatively, the start time domain position of the second data channel may be located at the boundary of the time unit in the fourth frame structure. The length of the time unit in the fourth frame structure is less than the length of the time unit in the third frame structure. Therefore, in comparison with alignment with the boundary of the time unit in the third frame structure, the start time domain position of the second data channel being aligned with the boundary of the time unit in the fourth frame structure requires shorter waiting time. In this way, the communication apparatus can flexibly determine a transmission moment, waiting time in a transmission process can be reduced, and a latency can be reduced.

According to a fifth aspect, a communication method is provided. The method may be performed by a second communication apparatus, may be performed by a part of a second communication apparatus, for example, a processor, a chip, a chip system, or the like of the second communication apparatus, or may be implemented by a logic module or software that can implement all or a part of functions of a second communication apparatus. The method includes: determining a second data channel, and sending the second data channel. A start time domain position of the second data channel is located at any position in a time unit in a third frame structure, or a start time domain position of the second data channel is located at a boundary of a time unit in a fourth frame structure, the third frame structure is a frame structure corresponding to a third subcarrier spacing, the fourth frame structure is a frame structure corresponding to a fourth subcarrier spacing, and the fourth subcarrier spacing is greater than the third subcarrier spacing.

In a possible design, the method further includes: sending a second signal, where the second signal is used to request to schedule the second data channel, or the second signal indicates transmission of the second data channel. A start time domain position of the second signal is located at any position in a time unit in the third frame structure, or a start time domain position corresponding to the second signal is located at a boundary of a time unit in the fourth frame structure.

For technical effect brought by the fifth aspect and the possible design, refer to the technical effect brought by the corresponding design in the fourth aspect. Details are not described herein again.

With reference to the fourth aspect or the fifth aspect, in a possible design, the second signal is used to request to schedule the second data channel. The method further includes: receiving a fourth control channel, where the fourth control channel is used to schedule the second data channel.

With reference to the fourth aspect or the fifth aspect, in a possible design, a start time domain position of the fourth control channel is located at any position in a time unit in the third frame structure, or a start time domain position of the fourth control channel is located at a boundary of a time unit in the fourth frame structure.

Based on the possible design, because the fourth control channel may be transmitted at any moment, after the second signal is detected and processed, a first communication apparatus may immediately send the fourth control channel to schedule the second data channel. This reduces a waiting latency of the fourth control channel, and further reduces a latency in a communication process.

With reference to the fourth aspect or the fifth aspect, in a possible design, an interval between an end time domain position of the fourth control channel and the start time domain position of the second data channel is 0.

With reference to the fourth aspect or the fifth aspect, in a possible design, the fourth control channel carries second information. The second information indicates a quantity of time units by which the start time domain position of the second data channel is offset relative to a time domain resource of the fourth control channel, where the time unit is a time unit in the third frame structure or a time unit in the fourth frame structure. Alternatively, the second information indicates duration by which the start time domain position of the second data channel is offset relative to a time domain resource of the fourth control channel.

With reference to the fourth aspect or the fifth aspect, in a possible design, there is a correspondence between a third parameter and a fourth parameter. The third parameter includes at least one of the following: the third subcarrier spacing, a cyclic prefix length corresponding to the third subcarrier spacing, a time-frequency resource position of the second signal, a scrambling identifier of the second signal, or a root value of a second reference sequence, where the second reference sequence is used to generate the second signal, and the root value of the second reference sequence is used to determine the second reference sequence. The fourth parameter includes at least one of the following: the fourth subcarrier spacing, a cyclic prefix length corresponding to the fourth subcarrier spacing, or a time-frequency resource position of the second data channel.

With reference to the fourth aspect or the fifth aspect, in a possible design, a frequency domain resource of the second signal is the same as a frequency domain resource of the second data channel; or a center frequency of a frequency domain resource of the second signal is the same as a center frequency of a frequency domain resource of the second data channel; or a frequency domain resource of the second signal includes a frequency domain resource of the second data channel.

According to a sixth aspect, a communication apparatus is provided. The communication apparatus includes a unit or a module, and the unit or the module is configured to perform any method according to the first aspect to the fifth aspect.

According to a seventh aspect, a communication apparatus is provided to implement various methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver, a transceiver device, or a communication interface.

According to an eighth aspect, a communication apparatus is provided, and includes a processor and a memory. The memory is configured to store computer instructions, and when the processor executes the instructions, the communication apparatus is enabled to perform the method according to any one of the aspects.

According to a ninth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the aspects.

According to a tenth aspect, a communication apparatus is provided, and includes at least one processor. The processor is configured to execute a computer program or instructions stored in a memory, to enable the communication apparatus to perform the method according to any one of the aspects. The memory may be coupled to the processor, or may be independent of the processor.

According to an eleventh aspect, a computer-readable storage medium is provided. The computer-readable storage medium stores a computer program or instructions. When the computer program or the instructions are run on a communication apparatus, the communication apparatus is enabled to perform the method according to any one of the aspects.

According to a twelfth aspect, a computer program product including instructions is provided. When the computer program product runs on a communication apparatus, the communication apparatus is enabled to perform the method according to any one of the aspects.

According to a thirteenth aspect, a communication apparatus is provided (for example, the communication apparatus may be a chip or a chip system). The communication apparatus includes a processor, configured to implement the functions in any one of the aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the sixth aspect to the thirteenth aspect is a chip, a sending action/function of the communication apparatus may be understood as information output, and a receiving action/function of the communication apparatus may be understood as information input.

The communication apparatus provided in any one of the sixth aspect to the thirteenth aspect may be the first communication apparatus in the first aspect or the second aspect, or an apparatus included in the first communication apparatus, for example, a chip or a chip system; or the communication apparatus may be the second communication apparatus in the first aspect, the third aspect, the fourth aspect, or the fifth aspect, or an apparatus included in the second communication apparatus, for example, a chip or a chip system.

For technical effect brought by any design manner of the sixth aspect to the thirteenth aspect, refer to the technical effect brought by different design manners of the first aspect to the sixth aspect. Details are not described herein again.

### BRIEF DESCRIPTION OF DRAWINGS

FIG. 1 is a diagram of a structure of a communication system according to this application;
FIG. 2 is a diagram of a structure of a communication system according to this application;
FIG. 3 is a diagram of a structure of a communication system according to this application;
FIG. 4 is a diagram of a structure of a communication system according to this application;
FIG. 5 is a diagram of a structure of a communication system according to this application;
FIG. 6 is a diagram of a frame structure according to this application;
FIG. 7 is a diagram of a time sequence of performing communication based on a fixed frame structure according to this application;
FIG. 8 is a schematic flowchart of a communication method according to this application;
FIG. 9 is a diagram of a time domain position of an information block according to this application;
FIG. 10 is a diagram of a time domain position relationship between a first reference signal and a first control channel according to this application;
FIG. 11 is a diagram of a structure of an information block according to this application;
FIG. 12 is a diagram of a structure of an information block according to this application;
FIG. 13 is a diagram of an RE position at which a first reference signal is located according to this application;
FIG. 14 is a schematic flowchart of a communication method according to this application;
FIG. 15 is a diagram of a time domain position of a PDCCH or a PDSCH according to this application;
FIG. 16 is a diagram of a time domain position of a first signal according to this application;
FIG. 17 is a diagram of transmission time sequence comparison according to this application;
FIG. 18 is a diagram of time domain position comparison according to this application;
FIG. 19 is a diagram of an RE position at which a first signal is located according to this application;
FIG. 20 is a diagram of transmission time sequence comparison according to this application;
FIG. 21 is a schematic flowchart of a communication method according to this application;
FIG. 22 is a diagram of a time domain position of an SR according to this application;
FIG. 23 is a diagram of transmission time sequence comparison according to this application;
FIG. 24 is a diagram of transmission time sequence comparison according to this application;
FIG. 25 is a schematic flowchart of a communication method according to this application;
FIG. 26 is a diagram of transmission time sequence comparison according to this application;
FIG. 27 is a diagram of a structure of a communication apparatus according to this application;
FIG. 28 is a diagram of a structure of another communication apparatus according to this application; and
FIG. 29 is a diagram of a structure of still another communication apparatus according to this application.

### DESCRIPTION OF EMBODIMENTS

In the descriptions of this application, "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

In embodiments of this application, the word "example", "for example" or the like is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, the apparatus provided in embodiments of this application may also correspondingly implement these features or functions. Details are not described herein.

In this application, for same or similar parts of embodiments, mutual reference may be made between embodiments, unless otherwise specified. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

The technical solutions provided in this application may be applied to various communication systems. The communication system may be a 3^{rd} generation partnership project (3^{rd} generation partnership project, 3GPP) communication system, for example, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a 4^{th} generation (4^{th} generation, 4G) long-term evolution (long-term evolution, LTE) system, a 5^{th} generation (5^{th} generation, 5G) new radio (new radio, NR) system, a non-terrestrial network (non-terrestrial network, NTN), a satellite communication system, an integrated access and backhaul (integrated access and backhaul, IAB) system, a vehicle to everything (vehicle to everything, V2X) system, an LTE and NR hybrid networking system, a device-to-device (device-to-device, D2D) system, a machine-to-machine (machine-to-machine, M2M) communication system, an internet of things (Internet of Things, IoT) system, a narrow band-internet of things (narrow band-internet of things, NB-IoT) system, another next-generation communication system, or the like. Alternatively, the communication system may be a non-3GPP communication system, for example, a wireless local area network (wireless local area network, WLAN). This is not limited.

The technical solutions provided in this application may be applied to various communication scenarios. For example, the technical solutions may be applied to an enhanced mobile broadband (enhance mobile broadband, eMBB) scenario, an ultra-reliability low latency communication (ultra-reliability low latency communication, URLLC) scenario, an enhanced machine type communication (enhanced machine type communication, eMTC) scenario, or another scenario of a 5G mobile communication system or another next-generation mobile communication system.

For example, a communication system to which this application is applicable may include a first communication apparatus and at least one second communication apparatus. The first communication apparatus and the second communication apparatus may communicate with each other in a wireless manner.

Optionally, the first communication apparatus may schedule data sending and/or receiving of the second communication apparatus. In other words, the first communication apparatus may schedule a time-frequency resource used by the first communication apparatus to send data to the second communication apparatus, and/or may schedule a time-frequency resource used by the second communication apparatus to send data to the first communication apparatus.

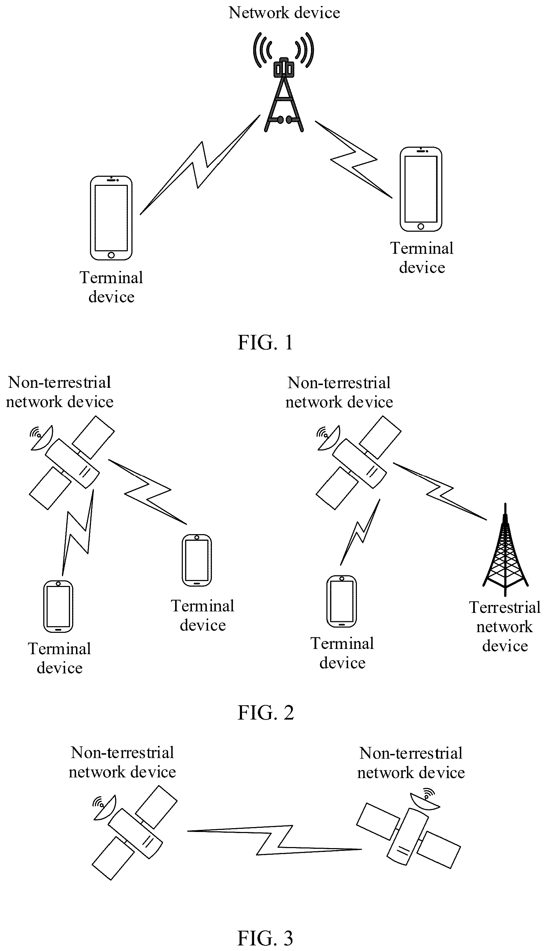

In a first possible implementation, as shown in FIG. 1, the first communication apparatus may be a network device, and the second communication apparatus may be a terminal device.

Optionally, the network device is a device that enables a terminal device to access a wireless network. The network device may be referred to as a node in a radio access network (radio access network, RAN), or may be referred to as a radio access network node or a radio access network device.

In some possible scenarios, the network device may be an evolved NodeB (NodeB, eNB, or e-NodeB, evolved NodeB) in an LTE system or an LTE-advanced (LTE-advanced, LTE-A) system, for example, a conventional macro base station eNB or a micro base station eNB in a heterogeneous network scenario. Alternatively, the network device may be a next generation NodeB (next generation NodeB, gNB) in an NR system; or may be a base station in a future evolved public land mobile network (public land mobile network, PLMN); or may be a transmission reception point (transmission reception point, TRP); or may be a radio controller in a cloud radio access network (cloud radio access network, CRAN); or may be a wireless relay node or a wireless backhaul node; or may be a device that implements a base station function in the internet of things (internet of things, IoT), for example, a device that implements a base station function in uncrewed aerial vehicle communication, V2X, D2D, or M2M; or may be an access point (access point, AP) in a WLAN.

In a possible product form, the network device may include a baseband unit (baseband unit, BBU) and a remote radio unit (remote radio unit, RRU). The BBU and the RRU may be deployed in different places. For example, the RRU is remotely deployed in a heavy-traffic area, and the BBU is deployed in a central equipment room. Alternatively, the BBU and the RRU may be deployed in a same equipment room. Alternatively, the BBU and the RRU may be different components at a same rack.

In another possible product form, the network device may be a module or a unit that can implement a part of functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, included in an RRU, an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP or the CU-UP), the DU, and the RU in this application may be implemented by using a software module, a hardware module, or a combination of a software module and a hardware module.

For example, the CU and the DU may be obtained through division based on protocol layers of a wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are set on the CU, and functions of a protocol layer (for example, a radio link control (radio link control, RLC) layer, a media access control (media access control, MAC) layer, or a physical (physical, PHY) layer) below the PDCP layer are set on the DU. For another example, functions of a protocol layer above the PDCP layer are set on the CU, and functions of the PDCP layer and a protocol layer below the PDCP layer are set on the DU. This is not limited.

The division into processing functions of the CU and the DU based on protocol layers is merely an example, and may alternatively be performed in another division manner. For example, the CU or the DU may have functions of more protocol layers through division. For another example, the CU or the DU may have a part of processing functions of the protocol layers through division. In a design, a part of functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU.

Optionally, the terminal device may be a user-side device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal may be deployed on land, including an indoor terminal, an outdoor terminal, a handheld terminal, or a vehicle-mounted terminal; or may be deployed on water (for example, on a ship); or may be deployed in the air (for example, on a plane, a balloon, or a satellite).

For example, the terminal device may be an uncrewed aerial vehicle, an IoT device (for example, a sensor, an electricity meter, or a water meter), a V2X device, a station (station, STA) in a WLAN, a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a terminal in integrated sensing and communication, a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle to uncrewed aerial vehicle (UAV to UAV, U2U) communication capability. The terminal may be mobile or stationary. This is not specifically limited in this application.

In a second possible implementation, as shown in the left figure in FIG. 2, the first communication apparatus may be a network device in an NTN, and the second communication apparatus may be a terminal device. To be specific, the first communication apparatus is a non-terrestrial base station or a non-terrestrial network device. For example, the first communication apparatus may be a network device deployed on a flight platform or a satellite. For example, the flight platform may be an uncrewed aerial vehicle, a hot air balloon, an airplane, or the like. The satellite may be a low earth orbit satellite, a medium earth orbit satellite, a high earth orbit satellite, or the like.

Alternatively, as shown in the right figure in FIG. 2, one of the first communication apparatus and the second communication apparatus may be a non-terrestrial network device, and the other may be a terrestrial network device. To be specific, one of the first communication apparatus and the second communication apparatus is deployed on a high altitude platform or a satellite, and the other is deployed on the ground. In this scenario, the non-terrestrial network device may be used as a base station, or may be used as a terminal device.

In a third possible implementation, as shown in FIG. 3, both the first communication apparatus and the second communication apparatus may be apparatuses deployed on a high altitude platform or a satellite. In this scenario, a channel between the first communication apparatus and the second communication apparatus may be referred to as an inter-satellite link, and a communication system shown in FIG. 3 may also be referred to as an inter-satellite link communication system.

For example, the inter-satellite link communication system includes an acquisition pointing tracking (acquisition pointing tracking, APT) subsystem and a communication subsystem. The communication subsystem is used for inter-satellite information transmission, and is a main body of the inter-satellite communication system. The APT subsystem is used for acquisition, alignment, and tracking between satellites. Acquisition can be understood as determining a direction of an incoming signal, alignment can be understood as adjusting a transmit beam to aim at a receive direction, and tracking can be understood as continuous pointing and acquisition during an entire communication process.

For example, the communication subsystem may be implemented by a communication module and a transceiver antenna in a communication apparatus. The APT subsystem may be implemented by an APT module and an APT transmit/receive module in the communication apparatus.

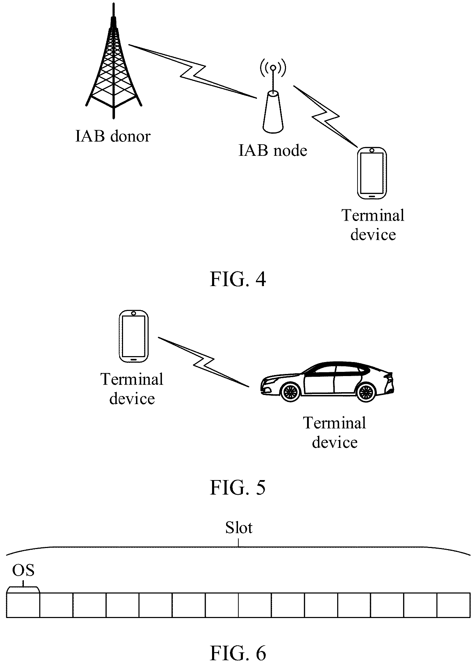

In a fourth possible implementation, as shown in FIG. 4, the first communication apparatus may be an IAB node (IAB-node) in an IAB scenario, and the second communication apparatus may be a terminal device in the IAB scenario. Alternatively, the first communication apparatus may be a parent node in an IAB scenario, and the second communication apparatus may be a child node in the IAB scenario. The child node is an IAB node, and the parent node of the child node may be an IAB node or an IAB donor (IAB-donor).

Optionally, the IAB node may provide a wireless access service for the terminal device, and service data of the terminal device is sent by the IAB node to the IAB donor through a wireless backhaul link. The IAB node may access the IAB donor or may be connected to the IAB donor through another IAB node.

In a fifth possible implementation, as shown in FIG. 5, the first communication apparatus may be a terminal device, and the second communication apparatus may also be a terminal device.

For example, the first communication apparatus and the second communication apparatus may be two terminal devices in a wireless projection scenario, or may be two terminal devices in a VR game scenario. Certainly, the first communication apparatus and the second communication apparatus may be two terminal devices in another application scenario. This is not specifically limited in this application.

For descriptions of the network device and the terminal device in the second possible implementation to the fifth possible implementation, refer to the related descriptions in the first possible implementation. Details are not described herein again.

It should be noted that the foregoing communication system applicable to this application is merely an example for description, and a communication system applicable to this application is not limited thereto. Unified descriptions are provided herein. Details are not described below again.

For ease of understanding of the technical solutions in embodiments of this application, the following first briefly describes technologies related to this application.

### 1. URLLC

A most significant feature of the URLLC is a low latency and high reliability. An industrial manufacturing scenario is a specific scenario of the URLLC, and has an extremely challenging requirement for a low latency and high reliability. In the industrial manufacturing scenario, a manufacturing device in an intelligent factory accesses an enterprise cloud or a field control system through a mobile communication network, collects field environment data, generates data, and analyzes a production status in real time, to implement unmanned and wireless production of an entire production line.

Intelligent industrial manufacturing has a high requirement on technical performance, and the high-end manufacturing industry has a very high requirement on a latency and stability of a workshop device. For example, the intelligent factory industry proposes a very specific performance requirement. For example, in a service area of no more than 50 users, communication service availability (communication system availability, CSA) of a data packet whose size is 40 bytes needs to be between 99.9999% and 99.999999% in an end-to-end latency of 1 millisecond (millisecond, ms). The CSA may be defined as follows: If a data packet received by a receive end is damaged or is not received in time (exceeding an allowed maximum end-to-end latency), the service is considered unavailable.

### 2. Wireless data communication

Wireless communication between a base station and a terminal device, namely, Uu communication, is used as an example. The base station may send downlink control information (downlink control information, DCI) to the terminal device to schedule data transmission. The DCI may be carried on a physical downlink control channel (physical downlink control channel, PDCCH). The data transmission may include downlink data transmission and uplink data transmission. Downlink data is carried on a physical downlink shared channel (physical downlink shared channel, PDSCH), and uplink data is carried on a physical uplink shared channel (physical uplink shared channel, PUSCH). The DCI may be used to schedule data transmission by indicating a PDSCH resource or a PUSCH resource.

For example, the base station may configure a PDCCH detection moment based on higher layer signaling, and the terminal device performs PDCCH detection based on a configuration of the base station, and determines, based on a cyclic redundancy check (cyclic redundancy check, CRC), whether a detected PDCCH is used to schedule the data transmission of the terminal device. If the detected PDCCH is used to schedule the data transmission of the terminal device, the terminal device performs downlink receiving or uplink sending based on the DCI carried on the PDCCH.

In a current wireless communication system, for example, a 5G system, a frame structure is fixed at one subcarrier spacing. For example, at a subcarrier spacing of 15 kilohertz (kHz), as shown in FIG. 6, one radio frame may include 10 subframes, one subframe may include one slot, and one slot may include 14 orthogonal frequency division multiplexing (orthogonal frequency division multiplexing, OFDM) symbols (OFDM symbols, OSs). In addition, a communication moment usually starts from a subframe boundary, a slot boundary, or an OFDM symbol boundary at a fixed subcarrier spacing.

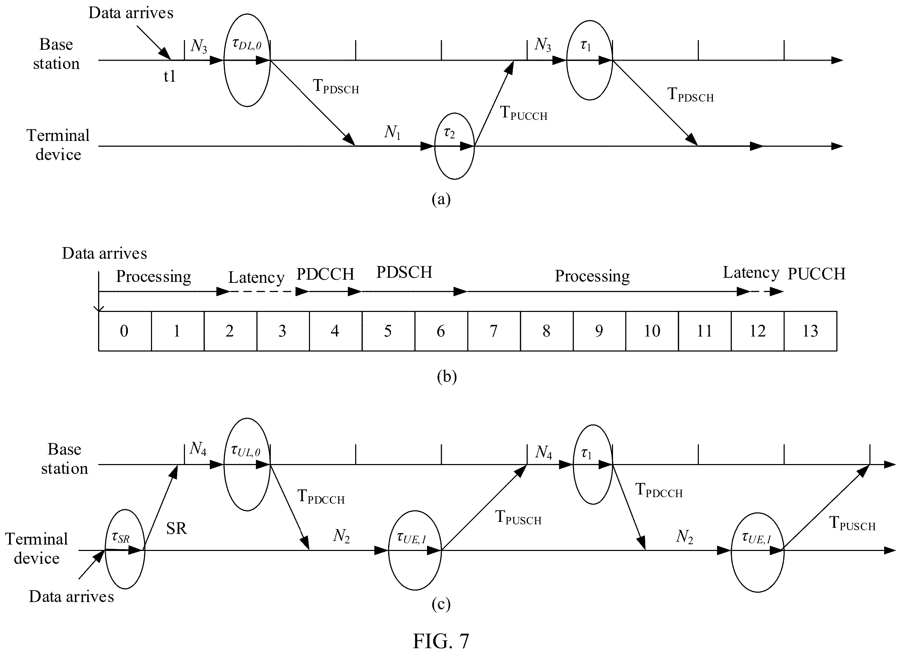

For example, as shown in (a) in FIG. 7, PDSCH transmission is used as an example. It is assumed that data arrives at a moment t1, and the base station completes processing after duration *N*₃. However, when processing is completed, a slot boundary or a symbol boundary is not reached. Therefore, the base station waits for duration *τ*_{*DL,*0}, and sends a PDSCH after the slot boundary is reached. The terminal device receives the PDSCH, and sends a physical uplink control channel (physical uplink control channel, PUCCH) after processing the PDSCH for duration *N*₁ and waiting for duration *τ*₂. The PUCCH is used to feed back whether the PDSCH is successfully received, and a start time domain position of the PUCCH is located at a boundary of an OFDM symbol in a slot. After receiving the PUCCH, the base station continues to send the PDSCH at the slot boundary or the symbol boundary after processing the PUCCH for the duration *N*₃ and waiting for duration *τ*₁. The terminal device continues to receive the PDSCH and decode the PDSCH.

For another example, PDSCH transmission shown in (b) in FIG. 7 is used as an example. It is assumed that OFDM symbols 0, 4, 8, and 12 in a slot are used to transmit a PDCCH, OFDM symbols 5 and 6 are used to transmit a PDSCH, and an OFDM symbol 13 is used to transmit a PUCCH. If data arrives at a start moment of the slot, and processing is completed after a period of time (for example, 2.75 OSs). However, time at which processing is completed is not located in an OFDM symbol used to transmit the PDCCH, the terminal device needs to wait for a period of time. After an OFDM symbol (namely, the OFDM symbol 4) used to transmit the PDCCH arrives, the terminal device sends the PDCCH in the OFDM symbol 4. The PDCCH may schedule the PDSCH to be sent in the OFDM symbol 5 and/or the OFDM symbol 6, so that the terminal device receives the PDSCH in the OFDM symbol 5 and/or the OFDM symbol 6. After processing is performed for a period of time (for example, 6.5 OSs), the terminal device waits for the OFDM symbol 13 used to transmit the PUCCH to arrive. After the OFDM symbol 13 arrives, the terminal device sends the PUCCH to feed back whether the PDSCH is successfully received.

Alternatively, as shown in (c) in FIG. 7, grant-based (grant-based, GB) PUSCH transmission is used as an example. It is assumed that data arrives at a moment t2. The terminal device sends a scheduling request (scheduling request, SR) after waiting for duration *τ_{SR}*. The SR is used to request the base station to allocate a resource for the PUSCH transmission, and a start time domain position of the SR is located at a boundary of an OFDM symbol in a slot. The base station receives the SR, and sends a PDCCH after processing the SR for duration *N*₄ and waiting for duration *τ*_{*UL,*0}. The PDCCH is used for uplink grant, or is used to schedule the PUSCH transmission.

The terminal device receives the PDCCH, and sends a PUSCH at a slot boundary or a symbol boundary after processing the PDCCH for duration *N*₂ and waiting for duration *τ*_{*UE*,1}. The base station receives the PUSCH, and continues to send the PDCCH at a slot boundary or a symbol boundary after processing the PUSCH for the duration *N*₄ and waiting for duration *τ*₁, where the PDCCH is used to continue to schedule the PUSCH transmission. The terminal device receives the PDCCH again, and continues to send the PUSCH after processing the PDCCH for the duration *N*₂ and waiting for the duration *τ*_{*UE,*1}. The base station continues to receive the PUSCH and decode the PUSCH.

In other words, because each channel in a current system needs to be transmitted based on a frame structure at a fixed subcarrier spacing, there is a waiting latency in a transmission process. Consequently, a data transmission latency is long. Therefore, in this transmission mechanism, a low latency requirement in some scenarios may not be met.

For example, based on the transmission mechanism, a simulation result obtained through simulation modeling by using a current 5G technology, for example, grant-free configuration, fast hybrid automatic repeat request (hybrid automatic repeat request, HARQ) feedback, and inter-cell ideal coordinated resource scheduling indicates that in an intelligent factory use case, a required CSA can be reached for a maximum of 20 users, and no simulation result can prove that a corresponding CSA requirement can be met in a scenario of 50 users. In other words, the current technology cannot meet a URLLC requirement in an intelligent factory. Consequently, a corresponding use case/service workshop/service area in the intelligent factory cannot be automated and wireless.

In view of this, this application provides a communication method. In the method, a communication apparatus may perform transmission at any position in a time unit in a first frame structure, or may perform transmission at a boundary of a time unit in a second frame structure. The first frame structure and the second frame structure are respectively a frame structure at a first subcarrier spacing and a frame structure at a second subcarrier spacing, the second subcarrier spacing is greater than the first subcarrier spacing, and the first subcarrier spacing is a subcarrier spacing of a data channel. Based on the solution, the communication apparatus can perform flexible transmission. This reduces a transmission latency.

With reference to the accompanying drawings, the following describes in detail the method provided in embodiments of this application by using interaction between the first communication apparatus and the second communication apparatus as an example.

It may be understood that, in embodiments of this application, the first communication apparatus or the second communication apparatus may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

It should be noted that names of messages between various communication apparatuses, names of parameters in the messages, or the like in the following embodiments of this application are merely examples, and there may be other names in a specific implementation. This is not specifically limited in embodiments of this application.

For example, the method provided in the following embodiments of this application may be applied to a URLLC scenario. Certainly, this is merely an example for describing an application scenario of this application. The method provided in embodiments of this application may be further applied to another scenario that has a low latency requirement. In addition, the application scenario described herein imposes no limitation on this application, and an application scenario of the method provided below is not specifically limited in this application.

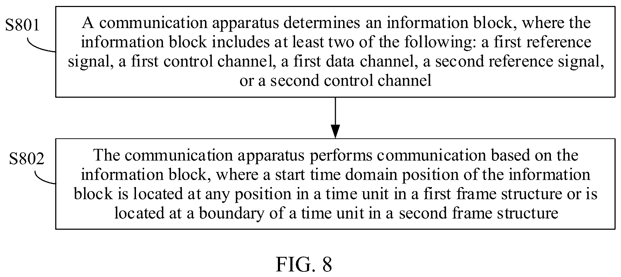

FIG. 8 is a schematic flowchart of a communication method according to an embodiment of this application. The communication method includes the following steps.

S801: A communication apparatus determines an information block, where the communication apparatus may be a first communication apparatus or a second communication apparatus.

The information block includes at least two of the following: a first reference signal, a first control channel, a first data channel, a second reference signal, or a second control channel.

Optionally, the first reference signal is used to determine detection time of the first control channel, or the first reference signal is used to trigger the first control channel, or the first reference signal indicates existence of the first control channel, or the first reference signal is used to determine a start time domain position of the first control channel. For example, the first reference signal may be generated based on a ZC sequence or an M sequence.

Optionally, the first reference signal may be further used for channel estimation, and a channel estimation result may be used to receive the first control channel and/or the first data channel.

Optionally, the first control channel is used to schedule the first data channel. The first control channel is a physical layer channel. For example, the first control channel may be a PDCCH, or the first control channel may be a physical reception link control channel (physical reception link control channel, PRxCCH). It may be considered that the PRxCCH is described from a perspective of a terminal device. For the terminal device, a function of the PRxCCH is similar to that of the PDCCH, and the PRxCCH may be a newly introduced physical layer control channel in a future evolved mobile communication system, for example, a 6^{th} generation (6^{th} generation, 6G) mobile communication system. Certainly, in the 6G system, the PDCCH may still be used to represent a physical downlink control channel or a physical reception link control channel of the terminal device.

For example, that the first control channel is used to schedule the first data channel may be understood as that the first control channel carries control information, for example, downlink control information (downlink control information, DCI), and the control information is used to schedule the first data channel.

Optionally, the first data channel is a physical layer channel. For example, the first data channel may be a PDSCH, or the first data channel may be a physical reception link shared channel (physical reception link shared channel, PRxSCH). It may be considered that the PRxSCH is described from a perspective of the terminal device. For the terminal device, a function of the PRxSCH is similar to that of the PDSCH, and the PRxSCH may be a newly introduced physical layer data channel in a future evolved mobile communication system, for example, a 6G mobile communication system. Certainly, in the 6G system, the PDSCH may still be used to represent a physical downlink data channel or a physical reception link data channel of the terminal device.

Optionally, the second reference signal is used to demodulate the first data channel. For example, the second reference signal may be a demodulation reference signal (demodulation reference signal, DMRS).

Optionally, the second control channel is used to feed back whether the first data channel is successfully received, or the second control channel is used to feed back whether data carried on the first data channel is successfully received, or the second control channel is used to perform HARQ feedback for the first data channel (or the data carried on the first data channel). The second control channel is a physical layer channel. For example, the second control channel may be a PUCCH, or the second control channel may be a physical transmission link control channel (physical transmission link control channel, PTxCCH). It may be considered that the PTxCCH is described from a perspective of the terminal device, and is a physical layer control channel sent by the terminal device. A function of the PTxCCH is similar to that of the PUCCH, and the PRxSCH may be a physical layer control channel newly introduced into a future evolved mobile communication system, for example, a 6G mobile communication system. Certainly, in the 6G system, the PUCCH may still be used to represent a physical uplink control channel or a physical transmission link control channel of the terminal device.

In a possible implementation, the information block includes the first reference signal and the first control channel. Alternatively, the information block includes the first reference signal, the first control channel, and the first data channel. Alternatively, the information block includes the first control channel and the first data channel. Alternatively, the information block includes the first control channel, the first data channel, and the second reference signal. Alternatively, the information block includes the first control channel, the first data channel, and the second control channel. Alternatively, the information block includes the first reference signal, the first control channel, the first data channel, and the second control channel. Alternatively, the information block includes the first reference signal, the first control channel, the first data channel, and the second reference signal. Alternatively, the information block includes the first reference signal, the first control channel, the first data channel, the second reference signal, and the second control channel.

Optionally, the information block in embodiments of this application may be replaced with another name, for example, an information pattern, a transmission pattern, a transport block, or a transmission structure. A name of the information block is not specifically limited in this application.

S802: The communication apparatus performs communication based on the information block, where a start time domain position of the information block may be located at any moment.

In a first possible implementation, the start time domain position of the information block is located at any position in a time unit in a first frame structure. In other words, the start time domain position of the information block has an offset relative to a boundary of the time unit in the first frame structure.

The first frame structure is a frame structure corresponding to a first subcarrier spacing, or the first frame structure is a frame structure at the first subcarrier spacing. The first subcarrier spacing is a subcarrier spacing of the first data channel. Therefore, it may also be considered that the first frame structure is a frame structure of the first data channel.

Optionally, that the first subcarrier spacing is the subcarrier spacing of the first data channel may be understood as that the first subcarrier spacing is a subcarrier spacing determined or configured for the first data channel. The first data channel may use the first subcarrier spacing or may not use the first subcarrier spacing during actual transmission. Correspondingly, that the first frame structure is the frame structure of the first data channel may be understood as that the first frame structure is a frame structure determined or configured for the first data channel. The first data channel may use the first frame structure or may not use the first frame structure during actual transmission.

Optionally, the time unit in embodiments of this application may be a half-frame, a subframe, a slot, a mini-slot, an OFDM symbol, or the like, or may be another time unit in time domain. This is not specifically limited.

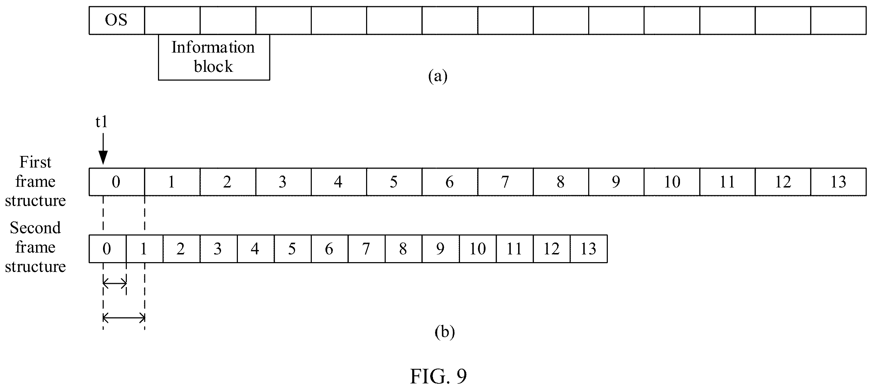

For example, the time unit is an OFDM symbol. As shown in (a) in FIG. 9, one rectangle represents one OFDM symbol in the first frame structure, and the start time domain position of the information block may be located at any position in the OFDM symbol in the first frame structure. In other words, the start time domain position of the information block does not need to be aligned with a boundary of the OFDM symbol in the first frame structure.

In a second possible implementation, the start time domain position of the information block is located at a boundary of a time unit in a second frame structure. The second frame structure is a frame structure corresponding to a second subcarrier spacing, and the second subcarrier spacing is greater than the first subcarrier spacing. For the first subcarrier spacing, refer to the related descriptions in the foregoing first possible implementation. Details are not described herein again.

Optionally, because the second subcarrier spacing is greater than the first subcarrier spacing, a length of the time unit in the second frame structure is less than a length of the time unit in the first frame structure. In other words, time units in the second frame structure are densely distributed. Therefore, the start time domain position of the information block being aligned with the boundary of the time unit in the second frame structure requires shorter waiting time in comparison with alignment with a boundary of the time unit in the first frame structure.

For example, as shown in (b) in FIG. 9, a first row represents the first frame structure, each rectangle represents one OFDM symbol in the first frame structure, a second row represents the second frame structure, and each rectangle represents one OFDM symbol in the second frame structure. It is assumed that the information block is ready at a moment t1, a boundary of a time unit closest to the moment t1 is a boundary of an OFDM symbol 1 in the second frame structure, and a boundary of an OFDM symbol 1 in the first frame structure is far away from the moment t1. Therefore, the start time domain position of the information block may be the boundary of the OFDM symbol 1 in the second frame structure.

Optionally, in embodiments of this application, start boundaries of the first frame structure and the second frame structure may be any moment. The first frame structure represents a frame structure type, and does not specifically refer to a specific radio frame. Similarly, the second frame structure also represents a frame structure type, and does not specifically refer to a specific radio frame.

For example, in embodiments of this application, the first subcarrier spacing may be 15 kHz, 60 kHz, 120 kHz, 240 kHz, 480 kHz, or the like. The second subcarrier spacing may be 60 kHz, 120 kHz, 240 kHz, 480 kHz, or the like. Certainly, the first subcarrier spacing and the second subcarrier spacing may have other values, provided that the first subcarrier spacing being greater than the second subcarrier spacing is met. This is not specifically limited in this application.

According to this solution, because the start time domain position of the information block may be located at any position in the time unit in the first frame structure, the communication apparatus can immediately perform communication based on the information block after preparation is completed, without waiting for the boundary of the time unit in the first frame structure to arrive. Therefore, a transmission moment can be flexibly determined, waiting time in a transmission process can be reduced, a latency can be reduced, and communication performance can be improved.

Alternatively, the start time domain position of the information block may be located at the boundary of the time unit in the second frame structure. The second subcarrier spacing is greater than the first subcarrier spacing, and the length of the time unit in the second frame structure is less than the length of the time unit in the first frame structure. Therefore, in comparison with alignment with the boundary of the time unit in the first frame structure, the start time domain position of the information block being aligned with the boundary of the time unit in the second frame structure requires shorter waiting time. In this way, the communication apparatus can flexibly determine a transmission moment, waiting time in a transmission process can be reduced, a latency can be reduced, and a low-latency requirement in some scenarios is met.

The foregoing describes an overall procedure of the communication method provided in embodiments of this application. The following further describes the information block.

Optionally, channels and signals included in the information block may be multiplexed in a time division multiplexing (time division multiplexing, TDM) manner, or may be multiplexed in a frequency division multiplexing (frequency division multiplexing, FDM) manner, or may be multiplexed in a manner combining TDM and FDM.

In a first possible implementation, a start time domain position of the first reference signal is the same as the start time domain position of the information block. In other words, the first reference signal is a first signal in the information block, or the first reference signal is located at the forefront of the information block, or a time domain position of the first reference signal is located before time domain positions of other channels or signals in the information block.

Based on the possible implementation, because the start time domain position of the first reference signal is the same as the start time domain position of the information block, the start time domain position of the information block can be determined after the start time domain position of the first reference signal is determined. In addition, because the first reference signal is a simple signal, for example, a ZC sequence, a receive apparatus may determine the start time domain position of the first reference signal and the start time domain position of the information block by detecting the first reference signal. In other words, the start time domain position of the information block may be determined through blind detection. This reduces detection complexity of the receive apparatus.

In a second possible implementation, a time domain resource of the first reference signal and a time domain resource of the first control channel are consecutive. The first reference signal is located before the first control channel. In other words, a time interval between an end time domain position of the first reference signal and a start time domain position of the first control channel is 0, or an end time unit of the first reference signal and a start time unit of the first control channel are adjacent. The end time unit of the first reference signal indicates a last time unit of the first reference signal, and the start time unit of the first control channel indicates a first time unit of the first control channel.

Based on the possible implementation, a transmit apparatus may immediately send the first control channel after sending the first reference signal, to schedule the first data channel. This reduces a scheduling latency.

Optionally, the end time unit of the first reference signal and the start time unit of the first control channel may be time units corresponding to a same subcarrier spacing, or may be time units corresponding to different subcarrier spacings. When the end time unit of the first reference signal and the start time unit of the first control channel are the time units corresponding to the different subcarrier spacings, that the end time unit of the first reference signal and the start time unit of the first control channel are adjacent may be understood as that a start boundary of a frame structure in which the start time unit of the first control channel is located is the end time domain position of the first reference signal.

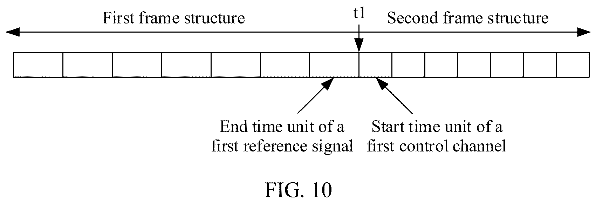

For example, as shown in FIG. 10, the end time unit of the first reference signal is a time unit corresponding to the first subcarrier spacing, and the start time unit of the first control channel is a time unit corresponding to the second subcarrier spacing. It is assumed that the end time domain position of the first reference signal is the moment t1. In this case, a start boundary of a second frame structure is the moment t1, and a first time unit in the second frame structure is the start time unit of the first control channel.

In a third possible implementation, a frequency domain resource of the first reference signal, a frequency domain resource of the first control channel, and a frequency domain resource of the first data channel are the same. In other words, the first reference signal, the first control channel, and the first data channel are multiplexed in a TDM manner.

Alternatively, a frequency domain resource of the first reference signal, a frequency domain resource of the first control channel, a frequency domain resource of the first data channel, and a frequency domain resource of the second control channel are the same. In other words, the first reference signal, the first control channel, the first data channel, and the second control channel are multiplexed in a TDM manner.

Based on the possible implementation, because the frequency domain resource of the first reference signal, the frequency domain resource of the first control channel, the frequency domain resource of the first data channel, and the frequency domain resource of the second control channel are the same, a transmit apparatus and a receive apparatus do not need to switch a frequency band of a transceiver in a communication process. This reduces communication complexity.

In a fourth possible implementation, a time domain resource of the first control channel and a time domain resource of the first data channel are consecutive, or an end time unit of the first control channel and a start time unit of the first data channel are adjacent. For example, the first control channel is located before the first data channel.

The end time unit of the first control channel indicates a last time unit of the first control channel, and the start time unit of the first data channel indicates a first time unit of the first data channel. For details about two time units being adjacent, refer to the related descriptions of the end time unit of the first reference signal and the start time unit of the first control channel being adjacent. Details are not described herein again.

Based on this possible implementation, the first data channel can be immediately sent after the first control channel to perform data transmission. This reduces a data waiting latency and reduces a communication latency.

Optionally, the second reference signal may be located in or carried on the first data channel. Alternatively, the second reference signal may be located in or carried on the first control channel.

Alternatively, a time domain resource of the first control channel and a time domain resource of the second reference signal are consecutive, and the time domain resource of the second reference signal and a time domain resource of the first data channel are consecutive. For example, the first control channel is located before the second reference signal, the second reference signal is located before the first data channel, and time domain resources of the first control channel, the second reference signal, and the first data channel are consecutive.

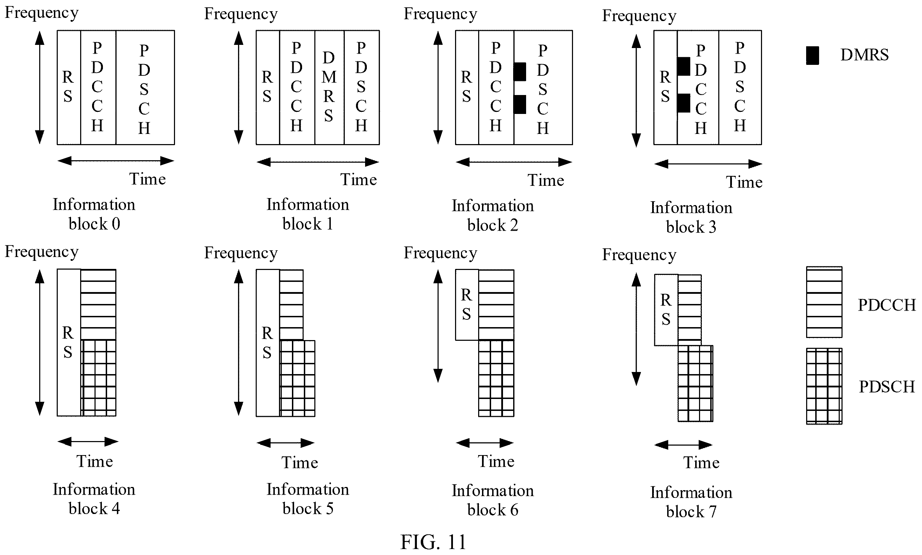

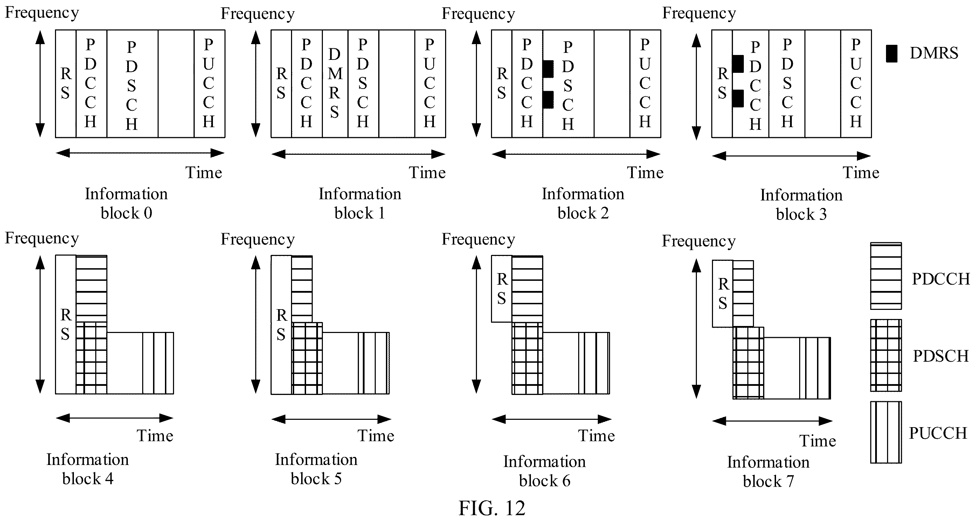

For example, the first reference signal is represented as a reference signal (reference signal, RS), the first control channel is a PDCCH, the first data channel is a PDSCH, the second reference signal is a DMRS, and the second control channel is a PUCCH. As shown in FIG. 11, in information block 0 to information block 3, frequency domain resources of the RS, the PDCCH, and the PDSCH are the same. As shown in FIG. 12, in information block 0 to information block 3, frequency domain resources of the RS, the PDCCH, the PDSCH, and the PUCCH are the same.

In addition, as shown in FIG. 11 and FIG. 12, a start time domain position of the RS is the same as a start time domain position of an information block, and a time domain resource of the RS and a time domain resource of the PDCCH are consecutive. In information block 0, information block 2, and information block 3, the time domain resource of the PDCCH and a time domain resource of the PDSCH are consecutive. In information block 1, the time domain resource of the PDCCH, a time domain resource of the DMRS, and the time domain resource of the PDSCH are consecutive. In information block 2, the DMRS is carried on the PDSCH. In information block 3, the DMRS is carried on the PDCCH.

It should be noted that FIG. 11 and FIG. 12 are merely examples for describing time domain position relationships between signals and channels, and widths and lengths of rectangles do not indicate absolute sizes of time domain resources and frequency domain resources occupied by the signals or the channels.

In a fifth possible implementation, a frequency domain resource of the first reference signal includes a frequency domain resource of the first control channel and a frequency domain resource of the first data channel. The frequency domain resource of the first control channel and the frequency domain resource of the first data channel do not overlap. In other words, the first control channel and the first data channel are multiplexed in an FDM manner.

For example, the frequency domain resource of the first reference signal includes only the frequency domain resource of the first control channel and the frequency domain resource of the first data channel. In other words, a frequency domain resource including the frequency domain resource of the first control channel and the frequency domain resource of the first data channel overlaps the frequency domain resource of the first reference signal. Alternatively, in addition to the frequency domain resource of the first control channel and the frequency domain resource of the first data channel, the frequency domain resource of the first reference signal may further include another frequency domain resource. In other words, a bandwidth of the frequency domain resource of the first reference signal is greater than a sum of a bandwidth of the frequency domain resource of the first control channel and a bandwidth of the frequency domain resource of the first data channel.

In a sixth possible implementation, a frequency domain resource of the first reference signal is the same as a frequency domain resource of the first control channel. Alternatively, a frequency domain resource of the first reference signal is the same as a frequency domain resource of the first data channel. The frequency domain resource of the first control channel and the frequency domain resource of the first data channel do not overlap.

Optionally, because the frequency domain resource of the first control channel and the frequency domain resource of the first data channel do not overlap, if the frequency domain resource of the first reference signal is the same as the frequency domain resource of the first control channel, it indicates that the frequency domain resource of the first reference signal and the frequency domain resource of the first data channel do not overlap. Therefore, to avoid switching between frequency bands by a transmitter/receiver of the communication apparatus, a frequency band in which the frequency domain resource of the first reference signal is located may be set to be the same as a frequency band in which the frequency domain resource of the first data channel is located. In other words, the first reference signal and the first data channel are located in a same frequency band. In addition, because the frequency domain resource of the first reference signal is the same as the frequency domain resource of the first control channel, the first data channel and the first control channel are also located in the same frequency band.

Optionally, because the frequency domain resource of the first control channel and the frequency domain resource of the first data channel do not overlap, if the frequency domain resource of the first reference signal is the same as the frequency domain resource of the first data channel, it indicates that the frequency domain resource of the first reference signal and the frequency domain resource of the first control channel do not overlap. Therefore, to avoid switching between frequency bands by the transmitter/receiver of the communication apparatus, the frequency band in which the frequency domain resource of the first reference signal is located may be set to be the same as the frequency band in which the frequency domain resource of the first control channel is located. In other words, the first reference signal and the first control channel are located in a same frequency band. In addition, because the frequency domain resource of the first reference signal is the same as the frequency domain resource of the first data channel, the first control channel and the first data channel are also located in the same frequency band.

In a seventh possible implementation, a time domain resource of the first control channel is the same as a time domain resource of the first data channel. In other words, the first control channel and the first data channel are multiplexed in an FDM manner. Alternatively, a time domain resource of the first data channel includes a time domain resource of the first control channel.

Optionally, in the seventh possible implementation, a receive apparatus may receive the first data channel while receiving the first control channel. Then, the receive apparatus first decodes the first control channel, obtains a reception parameter like a bit rate of the first data channel from the first control channel, and then decodes the first data channel based on the reception parameter.

Optionally, a reason why the time domain resource of the first data channel includes the time domain resource of the first control channel may be that the subcarrier spacing of the first data channel is different from a subcarrier spacing of the first control channel, or an amount of data carried on the first data channel is large, and a large quantity of time domain resources are occupied. Certainly, there may alternatively be another reason. This is not specifically limited in this application.

For example, the first reference signal is represented as an RS, the first control channel is a PDCCH, the first data channel is a PDSCH, and the second control channel is a PUCCH. As shown in FIG. 11 and FIG. 12, in information block 4 and information block 5, a frequency domain resource of the RS includes a frequency domain resource of the PDCCH and a frequency domain resource of the PDSCH. In information block 6 and information block 7, a frequency domain resource of the RS is the same as a frequency domain resource of the PDCCH. In information block 4 and information block 6, a time domain resource of the PDCCH is the same as a time domain resource of the PDSCH. In information block 5 and information block 7, a time domain resource of the PDSCH includes a time domain resource of the PDCCH.

Based on the possible implementation, the first control channel and the first data channel are multiplexed in an FDM manner. In other words, the time domain resource of the first control channel is the same as the time domain resource of the first data channel, or the time domain resource of the first data channel includes the time domain resource of the first control channel. In this way, the receive end apparatus can receive the first data channel while receiving the first control channel. This reduces a latency between the first data channel and the first control channel, and further reduces a communication latency.

In an eighth possible implementation, a time interval between the second control channel and the first data channel is greater than or equal to first duration. The first duration is minimum processing duration corresponding to a processing capability of a receive apparatus. In other words, the time interval between the second control channel and the first data channel is determined based on the processing capability of the receive apparatus.

The first duration may be x1 milliseconds (ms), x2 microseconds (µs), x3 nanoseconds (ns), or the like, where x1, x2, and x3 are real numbers. Alternatively, the first duration may be y1 time units, where y1 is a positive integer.

Optionally, the time interval between the second control channel and the first data channel may be a time interval between a start time domain position of the second control channel and a start time domain position of the first data channel, or a time interval between an end time domain position of the second control channel and an end time domain position of the first data channel, or a time interval between a start time domain position of the second control channel and an end time domain position of the first data channel.

Optionally, the receive apparatus may be the second communication apparatus. The processing capability of the receive apparatus may be a capability of decoding the first data channel by the receive apparatus, or include a capability of decoding the first data channel by the receive apparatus and a HARQ timing capability (HARQ timing capability), or may be a capability of processing a data channel. The processing capability of the receive apparatus may be used to represent time for a data channel processing procedure.

For example, the first data channel is a PDSCH, and the second control channel is a PUCCH. As shown in FIG. 12, in information block 0 to information block 7, a time interval between the PUCCH and the PDSCH may be equal to the first duration.

Based on the possible implementation, when the time interval between the second control channel and the first data channel is equal to the first duration, the receive apparatus may immediately send the second control channel after processing is completed, to feed back whether the first data channel is successfully received. This reduces feedback waiting time, that is, reduces a feedback latency, and further reduces a communication latency.

Optionally, the information block may not include the second reference signal. In this case, the receive apparatus may perform channel estimation based on the first reference signal, and receive the first control channel and/or the first data channel based on a result of the channel estimation. In other words, the first reference signal may be further used for channel estimation of the first control channel or the first data channel. In view of this, pilot overheads can be reduced. In addition, in comparison with channel estimation performed based on a reference signal carried on the first control channel and/or the first data channel, channel estimation of the first control channel and/or the first data channel can be performed in advance. Therefore, a channel estimation latency of the first control channel or the first data channel can be reduced.

It should be noted that structures of the information blocks shown in FIG. 11 and FIG. 12 are merely examples for description, and do not constitute any limitation on a structure of the information block. In an actual application, the information block may have another structure. For example, the information block does not include the first data channel, and a time domain position and/or a frequency domain position of the first data channel are/is indicated by the first control channel. This is not specifically limited in this application.

It should be noted that when the information block has a plurality of structures, the information blocks may be jointly numbered. For example, as shown in FIG. 11 and FIG. 12, eight information blocks are respectively numbered 0 to 7. Certainly, the information blocks may also be respectively numbered 1 to 8. Alternatively, the information blocks may be respectively numbered in a multiplexing manner. For example, information blocks (information block 0 to information block 3) that are multiplexed in a TDM manner in FIG. 11 and FIG. 12 may be numbered 0 to 3, and information blocks (information block 4 to information block 7) that are multiplexed in an FDM manner may also be numbered 0 to 3. Certainly, the information blocks may be numbered in another numbering manner. This is not specifically limited in this application.

Optionally, the information block may be predefined in a protocol. For example, the protocol may predefine one or more information blocks. The protocol may directly provide a structure of the information block in a graphical manner. For example, the protocol defines a pattern shown in FIG. 11 or FIG. 12. Alternatively, the protocol may describe, in a text manner, a feature that a structure of the information block needs to meet. This is not specifically limited in this application.

In addition, the information block may be configured by the first communication apparatus. For example, the first communication apparatus may send configuration information to the second communication apparatus, to configure a signal or a channel included in the information block, a multiplexing manner of each signal and/or channel, a time-frequency resource relationship between signals and/or channels, and the like.

Optionally, there is a correspondence between a parameter of the first reference signal and the information block. In other words, a specific type of the information block or a structure of the information block may be determined based on the parameter of the first reference signal. In other words, the first reference signal may further indicate the structure of the information block.

Optionally, the parameter of the first reference signal includes at least one of the following: a scrambling identifier of the first reference signal, a root value of a reference sequence, or a time-frequency resource position of the first reference signal. The reference sequence is used to generate the first reference signal. For example, the reference sequence may be a ZC sequence, an M sequence, or a Gold sequence. The root value of the reference sequence is used to determine the reference sequence. The scrambling identifier of the reference signal may be a radio network temporary identity (radio network temporary identity, RNTI) or a group RNTI of the receive apparatus.

Optionally, a correspondence between a scrambling identifier of a first reference signal or a root value of a reference sequence and an information block may be: One scrambling identifier corresponds to an identifier of one information block, and/or a root value of one reference sequence corresponds to an identifier of one information block. The identifier of the information block is used to uniquely identify the information block.

For example, when the scrambling identifier is the group RNTI of the receive apparatus, an identifier of an information block corresponding to a group RNTI may be *block ID = N_{RNTI} mod N.* Here, *N_{RNTI}* is the group RNTI, and *N* is a total quantity of information blocks, or is a quantity of types of information blocks or a quantity of structures of information blocks.

For example, a correspondence between the RNTI of the receive apparatus and an identifier of an information block, and a correspondence between a root value of a reference sequence and an identifier of an information block may be defined in a protocol, or may be configured by the first communication apparatus. This is not specifically limited in this application.

Optionally, the time-frequency resource position of the first reference signal may include a location of a resource element (resource element, RE) in which the first reference signal is located, for example, a location of the RE in which the first reference signal is located in a resource block (resource block, RB).

For example, a location of the RE in which the first reference signal is located may correspond to an identifier of one information block. A correspondence between a location of the RE in which the first reference signal is located and an identifier of an information block may be predefined in a protocol, or may be configured by the first communication apparatus. This is not specifically limited in this application.

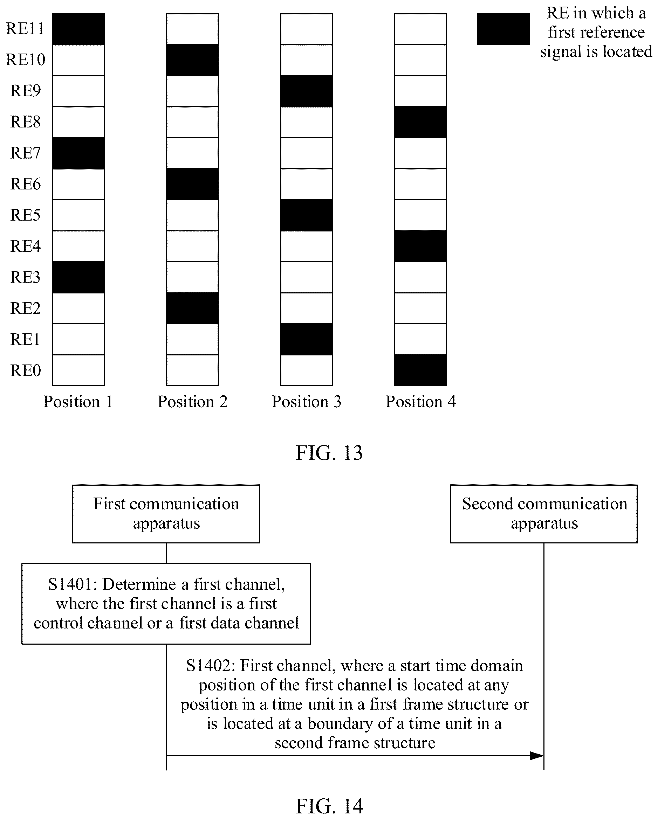

For example, one RB includes 12 REs, and the first reference signal occupies three REs in one RB. As shown in FIG. 13, four possible positions of the REs in which the first reference signal is located in the RB are shown. The four possible positions may correspond to four identifiers of information blocks. For example, position 1 corresponds to information block 1, position 2 corresponds to information block 2, position 3 corresponds to information block 3, and position 4 corresponds to information block 4.

Based on this solution, a structure of the information block may be determined based on the parameter of the first reference signal, to determine positions of channels, so that the receive apparatus can receive a channel or a signal at an appropriate time-frequency position. This improves receiving performance.

The following further describes step S801 and step S802 by using an example in which the information block includes the first reference signal, the transmit apparatus of the first reference signal is the first communication apparatus, and the receive apparatus is the second communication apparatus.

For the first communication apparatus,
optionally, in step S801, if there are a plurality of information blocks, the first communication apparatus may determine and/or select one information block from the plurality of information blocks. For example, the first communication apparatus may select one information block from the eight information blocks shown in FIG. 11 or FIG. 12.

Optionally, in step S802, that the first communication apparatus performs communication based on the information block may include: The first communication apparatus sends the first reference signal. Optionally, the first communication apparatus may send the first reference signal immediately after data arrives and is processed. Alternatively, the first communication apparatus may send the first reference signal when data arrives and processing is about to be completed. In this case, the end time domain position of the first reference signal may be the same as a moment at which processing is completed. For example, the first reference signal may be scrambled by using an RNTI or a group RNTI of the second communication apparatus.

Optionally, in step S802, that the first communication apparatus performs communication based on the information block may further include: The first communication apparatus sends at least one of the first control channel, the second reference signal, and the first data channel, and/or the first communication apparatus receives the second control channel.

It should be noted that, in embodiments of this application, sending a channel may also be understood as sending information or data carried in the channel, and receiving a channel may also be understood as receiving information or data carried in the channel. The two descriptions may be replaced with each other.

For the second communication apparatus,
optionally, in step S801, the second communication apparatus may determine the information block or the structure of the information block in the following two implementations.

Implementation 1: The second communication apparatus determines the information block based on an indication of the first communication apparatus.

Optionally, after determining the information block, the first communication apparatus may send indication information to the second communication apparatus. The indication information may indicate an identifier of the information block selected by the first communication apparatus. After receiving the indication information, the second communication apparatus may determine the information block based on the indication of the indication information.

Implementation 2: The second communication apparatus determines the information block based on the correspondence between the parameter of the first reference signal and the information block.

Optionally, the second communication apparatus may perform blind detection for the first reference signal. For example, the second communication apparatus may perform blind detection for the first reference signal by using the RNTI or the group RNTI of the second communication apparatus. After successfully detecting the first reference signal, the second communication apparatus determines the information block based on the correspondence between the parameter of the first reference signal and the information block.

For example, when the parameter of the first reference signal is the RNTI or the group RNTI, the second communication apparatus may determine that the information block is an information block corresponding to the RNTI or the group RNTI of the second communication apparatus.

When the parameter of the first reference signal is the root value of the reference sequence, the second communication apparatus may determine the reference sequence based on the detected first reference signal. For example, the second communication apparatus samples the first reference signal to obtain a reference sequence 1, and determines a root value of the reference sequence 1 based on the reference sequence 1, to determine that the information block is an information block corresponding to the root value of the reference sequence 1.

When the parameter of the first reference signal is the time-frequency resource position, the second communication apparatus may determine a position of an RE in which the detected first reference signal is located, for example, position 1, to determine that the information block is an information block corresponding to position 1.

Optionally, when the second communication apparatus determines the information block in the implementation 2, it may be considered that step S801 and step S802 are simultaneously performed for the second communication apparatus.

Optionally, in step S802, that the second communication apparatus performs communication based on the information block may include at least one of the following: receiving the first reference signal, receiving the first control channel, receiving the first data channel, or sending the second control channel.

For example, in step S802, the second communication apparatus may detect the first control channel based on the first reference signal, receive/decode the first data channel based on the first control channel, or send the second control channel based on a receiving status of the first data channel.

Optionally, the second communication apparatus may determine the start time domain position of the information block through blind detection, and determine time domain positions of signals or channels in the information block based on the time domain position relationships between the signals or channels in the information block. In addition, a start frequency domain position or a frequency domain resource size of the information block may be determined through blind detection, or may be predefined in a protocol, or may be configured by the first communication apparatus by using higher layer signaling (for example, RRC signaling). For example, the protocol may predefine or the first communication apparatus may configure a size of a frequency domain resource as x RBs, y resource block groups (resource block groups, RBGs), a bandwidth of z kHz or w megahertz (MHz), or the like. Here, x and y may be positive integers, and z and w may be real numbers.

Based on the foregoing solution, the first communication apparatus may initiate communication with the second communication apparatus at any moment, to avoid or reduce a waiting latency, reduce an end-to-end communication latency, and meet a low latency requirement. In addition, transmission does not need to be performed based on a fixed frame structure. This improves communication flexibility.

Optionally, before communicating with the second communication apparatus, the first communication apparatus may send information to the second communication apparatus. The information indicates a communication mechanism. The communication mechanism may be a communication mechanism based on a fixed frame structure, or a communication mechanism provided in this application. For example, the information indicates whether communication is subsequently performed through the communication mechanism based on the conventional fixed frame structure or through a communication mechanism provided in the method shown in FIG. 8. For example, the information may be carried in higher layer signaling (for example, RRC signaling) or physical layer signaling (for example, DCI).

Optionally, the first communication apparatus may determine different communication mechanisms based on different service modes or service types. For example, when a service type is a low latency service or a URLLC service, the first communication apparatus may determine to perform communication through the communication mechanism provided in the method shown in FIG. 8.

In addition to the method shown in FIG. 8, an embodiment of this application further provides a communication method. As shown in FIG. 14, the communication method includes the following steps.

S1401: A first communication apparatus determines a first channel.

The first channel is a first control channel or a first data channel. The first control channel is used to schedule the first data channel. For descriptions of the first control channel and the first data channel, refer to the related descriptions in step S801. Details are not described herein again.

Optionally, that the first communication apparatus determines the first channel may include: The first communication apparatus determines information or data carried on the first channel, and/or the first communication apparatus determines a time-frequency position of the first channel.

S1402: The first communication apparatus sends the first channel, and correspondingly, a second communication apparatus receives the first channel, where a start time domain position of the first channel may be located at any moment. In other words, the first channel may be transmitted at any moment.

In a first possible implementation, the start time domain position of the first channel is located at any position in a time unit in a first frame structure. The first frame structure is a frame structure corresponding to a first subcarrier spacing, and the first subcarrier spacing is a subcarrier spacing of the first data channel. For details, refer to the related descriptions in step S802. Details are not described herein again.

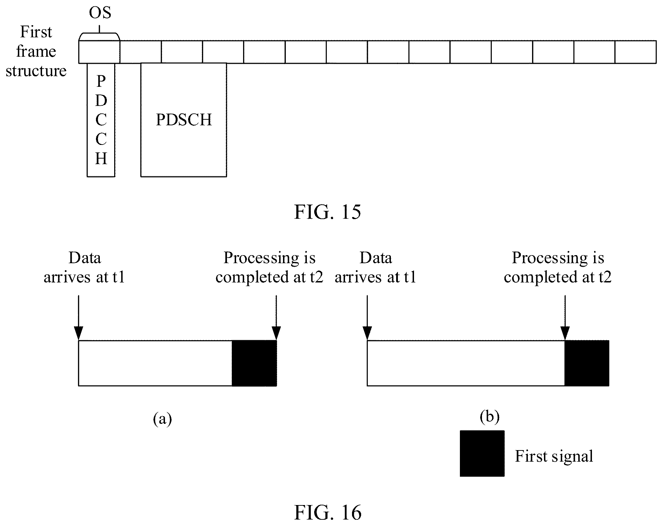

For example, the time unit is an OFDM symbol, the first channel is a first control channel, and the first control channel is a PDCCH. As shown in FIG. 15, a start time domain position of the PDCCH may be located at any position in an OFDM symbol in the first frame structure. Alternatively, the first channel is a first data channel, and the first data channel is a PDSCH. As shown in FIG. 15, a start time domain position of the PDSCH may be located at any position in an OFDM symbol in the first frame structure.

In a second possible implementation, the start time domain position of the first channel is located at a boundary of a time unit in a second frame structure. The second frame structure is a frame structure corresponding to a second subcarrier spacing, and the second subcarrier spacing is greater than the first subcarrier spacing. For details, refer to the related descriptions in step S802. Details are not described herein again.

S1403: The second communication apparatus performs communication based on the first channel.

Optionally, when the first channel is the first control channel, performing communication based on the first channel includes: receiving the first data channel based on the first control channel.

Optionally, when the first channel is the first data channel, performing communication based on the first channel includes: sending feedback information, where the feedback information is used to feed back whether the first data channel is successfully received.

In a possible implementation, when the first channel is the first data channel, the second communication apparatus may not perform step S1403. That is, the second communication apparatus may not send the feedback information. In this scenario, for the second communication apparatus, the second communication apparatus may first determine the first data channel, and then receive the first data channel.

For example, that the second communication apparatus determines the first data channel may be understood as that the second communication apparatus determines that the first data channel exists, or determines that the second communication apparatus needs to receive the first data channel, or determines that blind detection needs to be performed on the first data channel, or determines a time domain position and/or a frequency domain position of the first data channel.

According to this solution, because the start time domain position of the first channel may be located at any position in the time unit in the first frame structure, the first communication apparatus can immediately send the first channel after preparation is completed, without waiting for a boundary of the time unit in the first frame structure to arrive. Therefore, a transmission moment can be flexibly determined, waiting time in a transmission process can be reduced, a latency can be reduced, and communication performance can be improved.

Alternatively, the start time domain position of the first channel may be located at the boundary of the time unit in the second frame structure. The second subcarrier spacing is greater than the first subcarrier spacing, and a length of the time unit in the second frame structure is less than a length of the time unit in the first frame structure. Therefore, in comparison with alignment with the boundary of the time unit in the first frame structure, the start time domain position of the first channel being aligned with the boundary of the time unit in the second frame structure requires shorter waiting time. In this way, the communication apparatus can flexibly determine a transmission moment, waiting time in a transmission process can be reduced, a latency can be reduced, and a low-latency requirement in some scenarios is met.

The following further describes the method shown in FIG. 14 by using an example in which the first channel is separately the first control channel and the first data channel.

When the first channel is the first control channel,
optionally, before step S1402, the communication method may further include: The first communication apparatus sends a first signal. The first signal is used to determine detection time of the first control channel, or the first signal is used to trigger the first control channel, or the first signal indicates existence of the first control channel, or the first signal is used to determine a start time domain position of the first control channel. For example, an implementation of the first signal is similar to the implementation of the first reference signal in the method shown in FIG. 8. For example, the first signal may be a signal generated based on a ZC sequence, an M sequence, a Gold sequence, or the like.

A start time domain position of the first signal may be located at any moment. In other words, the first signal may be transmitted at any moment. For example, a start time domain position of the first signal is located at any location in a time unit in the first frame structure, or a start time domain position of the first signal is located at a boundary of a time unit in the second frame structure.

Optionally, the first signal may be sent within time in which the first communication apparatus prepares for processing or scheduling. For example, an end time domain position of the first signal is the same as a moment at which the first communication apparatus completes the processing or scheduling preparation. Alternatively, the first signal may be sent immediately after the first communication apparatus completes processing or scheduling preparation. For example, the start time domain position of the first signal may be the same as a moment at which the first communication apparatus completes the processing or scheduling preparation.

For example, as shown in FIG. 16, it is assumed that data arrives at a moment t1, and the first communication apparatus completes processing or scheduling preparation at a moment t2. In this case, as shown in (a) in FIG. 16, the end time domain position of the first signal may be located at the moment t2, or as shown in (b) in FIG. 16, the start time domain position of the first signal may be located at the moment t2.

Optionally, the first signal may be scrambled by using an RNTI or a group RNTI of the second communication apparatus. Before receiving the first control channel, the second communication apparatus may perform blind detection to receive the first signal. If the second communication apparatus detects or receives the first signal, it indicates that the first control channel is subsequently transmitted. In this case, the second communication apparatus may receive or detect the first control channel based on the first signal.

For example, that the second communication apparatus receives or detects the first control channel based on the first signal may include: The second communication apparatus determines the detection time or the start time domain position of the first control channel based on a time domain position of the first signal.

For the start time domain position of the first control channel,
in a possible implementation, an interval between the end time domain position of the first signal and a start time domain position of the first control channel is 0. In other words, a time domain resource of the first signal and a time domain resource of the first control channel are consecutive.

Based on this possible implementation, because the start time domain position of the first signal may be located at any moment, the first communication apparatus may immediately send the first signal when the first control channel can be sent, so that the second communication apparatus learns that there is subsequent transmission of the first control channel. In addition, the first control channel is sent immediately after the first signal is sent, and there is no need to wait for a boundary of the time unit in the first frame structure. This reduces a communication latency. In addition, the second communication apparatus may start to detect the first control channel at the end time domain position of the first signal, and does not need to continuously detect the first control channel at any moment. This can reduce processing complexity and power consumption overheads of the second communication apparatus.

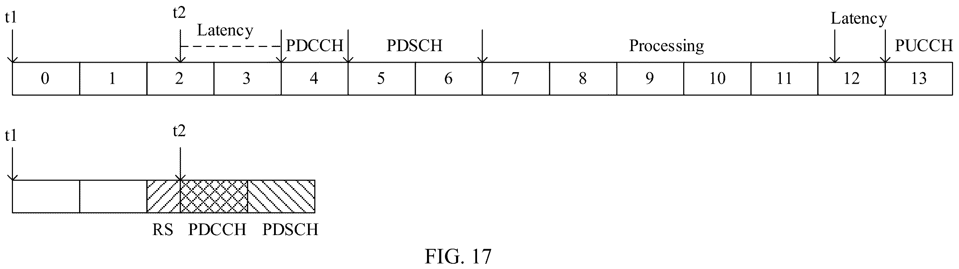

For example, as shown in FIG. 17, an upper figure is a diagram of communication performed based on a communication mechanism of a conventional fixed frame structure, and a lower figure is a diagram of communication performed based on the method shown in FIG. 14. For example, the first signal is an RS, the first control channel is a PDCCH, the first data channel is a PDSCH, and the second control channel is a PUCCH. In the upper figure, it is assumed that time unit 0, time unit 4, time unit 8, and time unit 12 are used to transmit the PDCCH, and time unit 13 is used to transmit the PUCCH. If data of the first communication apparatus arrives at the moment t1 and processing is completed at the moment t2, because a time unit in which the moment t2 is located is not used to transmit the PDCCH, the first communication apparatus needs to wait until a time unit used to transmit the PDCCH arrives, and then send the PDCCH to schedule the PDSCH. In the lower figure, because the RS may be transmitted at any moment, and an interval between a start time domain position of the PDCCH and an end time domain position of the RS may be 0, the first communication apparatus may send the RS when processing is about to be completed, and send the PDCCH immediately after the RS to schedule the PDSCH. This reduces a waiting latency of the PDCCH, and further reduces a communication latency.

In another possible implementation, the start time domain position of the first control channel is located at a start boundary of a 1^{st} time unit after the first signal. The 1^{st} time unit is a time unit corresponding to the second subcarrier spacing. In other words, the start time domain position of the first control channel is located at a start boundary of a time unit in the second frame structure, and the first control channel uses the second subcarrier spacing or the second frame structure.

In other words, when the first frame structure is a frame structure of a current data channel, and the first subcarrier spacing is a subcarrier spacing of the current data channel, a subcarrier spacing of the first control channel is greater than the subcarrier spacing of the data channel. Because the second subcarrier spacing is large, duration of the time unit corresponding to the second subcarrier spacing is short. In comparison with alignment with a start boundary of a time unit corresponding to the first subcarrier spacing, this can reduce a waiting latency.

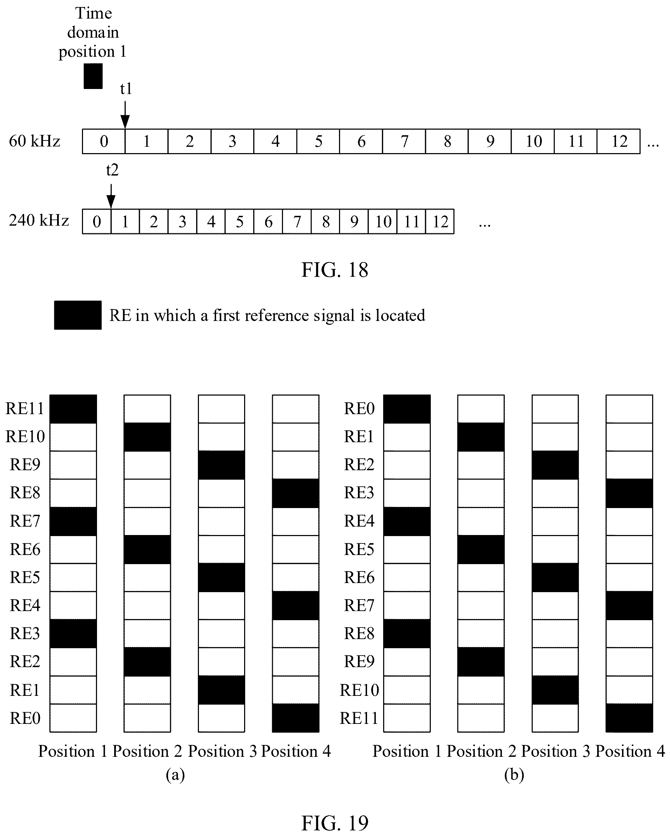

For example, as shown in FIG. 18, the first signal is located at time domain position 1, the first subcarrier spacing is 60 kHz, and the second subcarrier spacing is 240 kHz. At the first subcarrier spacing, time domain position 1 is located at time unit 0 in the first frame structure, and at the second subcarrier spacing, time domain position 1 is located at time unit 0 in the second frame structure. If the start time domain position of the first control channel is located at a start boundary of a 1^{st} time unit that corresponds to the first subcarrier and that is after the first signal, the start time domain position of the first control channel is located at the moment t1. If the start time domain position of the first control channel is located at a start boundary of a 1^{st} time unit that corresponds to the second subcarrier and that is after the first signal, the start time domain position of the first control channel is located at the moment t2. Because the moment t2 is earlier than the moment t1, a waiting latency can be reduced.

In addition, based on the possible implementation, the second communication apparatus may detect the first control channel at the start boundary of the 1^{st} time unit that corresponds to the second subcarrier spacing and that is after the first signal, and does not need to continuously detect the first control channel at any moment. This can reduce processing complexity and power consumption overheads of the second communication apparatus.

Optionally, when the start time domain position of the first control channel is located at the start boundary of the 1^{st} time unit after the first signal, it may also be considered that a start time unit of the first control channel is adjacent to an end time unit of the first signal.

Optionally, a size of the time domain resource of the first control channel may be predefined in a protocol, or may be configured by the first communication apparatus, or may be determined by the second communication apparatus through detection. This is not specifically limited in this application.

Optionally, a frequency domain resource of the first control channel may be predefined in a protocol, or may be configured by the first communication apparatus, or may be determined by the second communication apparatus through detection, or may be determined based on a frequency domain resource of the first signal. For example, the frequency domain resource of the first control channel may be the same as the frequency domain resource of the first signal. Alternatively, a center frequency of the frequency domain resource of the first control channel is the same as a center frequency of the frequency domain resource of the first signal. Alternatively, the frequency domain resource of the first signal may include the frequency domain resource of the first control channel. Alternatively, the frequency domain resource of the first control channel may include the frequency domain resource of the first signal.

Optionally, there is a correspondence between a first parameter and a second parameter. The first parameter includes at least one of the following: the first subcarrier spacing, a cyclic prefix (cyclic prefix, CP) length corresponding to the first subcarrier spacing, a time-frequency resource position of the first signal, a scrambling identifier of the first signal, or a root value of a first reference sequence. The second parameter includes at least one of the following: the second subcarrier spacing, a CP length corresponding to the second subcarrier spacing, a time-frequency resource position of the first control channel.

For example, the first subcarrier spacing herein may be a subcarrier spacing of the first signal. In other words, the first signal may be transmitted at the first subcarrier spacing. The second subcarrier spacing may be a subcarrier spacing of the first control channel.

Optionally, the first reference sequence is used to generate the first signal, and the first reference sequence may be, for example, a ZC sequence, an M sequence, or a Gold sequence. The root value of the first reference sequence is used to determine the first reference sequence. The scrambling identifier of the first signal may be an RNTI or a group RNTI of the second communication apparatus.

Optionally, the time-frequency resource position of the first signal may be a position of an RE in which the first signal is located, or may be a position of the time domain resource and/or the frequency domain resource. The time-frequency resource position of the first control channel may be the time domain resource and/or the frequency domain resource. For example, the time domain resource may include an OFDM symbol, a mini-slot, a slot, a subframe, or the like. The frequency domain resource may include an RB, an RBG, a center frequency, a bandwidth, or the like.

In a first example, the correspondence between the first parameter and the second parameter may specifically include: One scrambling identifier of the first signal corresponds to one second subcarrier spacing or a CP length corresponding to the second subcarrier spacing, or one root value of the first reference sequence corresponds to one second subcarrier spacing or a CP length corresponding to the second subcarrier spacing.

For example, each subcarrier spacing or a corresponding CP length may have one identifier. The identifier may be configured by the first communication apparatus, or may be defined in a protocol. This is not specifically limited in this application. The identifier of the subcarrier spacing or the corresponding CP length may be shown as follows:
SCS/CP ID 0: 60 kHz;
SCS/CP ID 1: 120 kHz;
SCS/CP ID 2: 240 kHz; and
SCS/CP ID 3: 480 kHz.

That is, an identifier of a subcarrier spacing of 60 kHz or a CP length corresponding to the subcarrier spacing is 0, and by analogy, an identifier of a subcarrier spacing of 480 kHz or a CP length corresponding to the subcarrier spacing is 3.

For example, when the scrambling identifier of the first signal is the group RNTI of the second communication apparatus, an SCS/CP identifier corresponding to a group RNTI may be *SCS*/*CP ID = N_{RNTI} mod N.* Here, *N_{RNTI}* is the group RNTI, and *N* is a total quantity of SCSs, or is a quantity of types of SCSs.

Optionally, based on the correspondence in the first example, the second communication apparatus may determine that the second subcarrier spacing is a subcarrier spacing corresponding to the RNTI or the group RNTI of the second communication apparatus. Alternatively, the second communication apparatus may determine the first reference sequence based on the detected first signal, and determine a subcarrier spacing corresponding to the root value of the first reference sequence as the second subcarrier spacing.

In a second example, the correspondence between the first parameter and the second parameter may specifically include: A position of an RE in which the first signal is located may correspond to one second subcarrier spacing or a CP length corresponding to the second subcarrier spacing.

For example, one RB includes 12 REs, and the first signal occupies three REs in one RB. (a) or (b) in FIG. 19 show four possible positions of REs in which the first signal is located in the RB. A difference between (a) and (b) lies in different RE numbering manners. The four possible positions shown in FIG. 19 may correspond to four second subcarrier spacings or corresponding CP lengths. For example, position 1 corresponds to SCS/CP ID 0, position 2 corresponds to SCS/CP ID 1, position 3 corresponds to SCS/CP ID 2, and position 4 corresponds to SCS/CP ID 3. For a subcarrier spacing or a CP length represented by an SCS/CP ID, refer to the related descriptions in the first example. Details are not described herein again.

In a third example, the correspondence between the first parameter and the second parameter may specifically include: One time domain resource of the first signal may correspond to one time domain resource of the first control channel, and/or one frequency domain resource of the first signal may correspond to one frequency domain resource of the first control channel.

For example, the time domain resource includes an OFDM symbol. A correspondence between a time domain resource of the first signal and a time domain resource of the first control channel may be as follows: A start OFDM symbol of the first control channel is adjacent to an end OFDM symbol of the first signal, or the like.

For example, a correspondence between a frequency domain resource of the first signal and a frequency domain resource of the first control channel may include: The frequency domain resource of the first control channel may be the same as the frequency domain resource of the first signal; or a center frequency of the frequency domain resource of the first control channel is the same as a center frequency of the frequency domain resource of the first signal; or the frequency domain resource of the first signal may include the frequency domain resource of the first control channel; or a bandwidth of the first signal is greater than a bandwidth of the first control channel; or the like.

Optionally, the correspondence between the first parameter and the second parameter may be defined in a protocol, or may be configured by the first communication apparatus. For example, the first communication apparatus may configure the correspondence between the first parameter and the second parameter in a system message or an RRC message. This is not specifically limited in this application.

Optionally, in addition to determining the second subcarrier spacing or the CP length corresponding to the second subcarrier spacing based on the correspondence between the first parameter and the second parameter, the first communication apparatus may dynamically configure the second subcarrier spacing or the CP length corresponding to the second subcarrier spacing. For example, the first communication apparatus may configure the second subcarrier spacing or the CP length corresponding to the second subcarrier spacing through RRC signaling.

Optionally, the first communication apparatus may not send the first signal, and directly send the first control channel after the data arrives and processing is completed, to further reduce a latency. In this scenario, the second communication apparatus performs blind detection on the first control channel.

Optionally, the first control channel may carry a DMRS, or may not carry a DMRS. The DMRS is used for channel estimation or demodulation of the first control channel. When the first control channel does not carry the DMRS, and the first communication apparatus sends the first signal, the first signal may be further used for channel estimation. In other words, the channel estimation of the first control channel may be performed based on the first signal. In this scenario, because the first control channel does not need to carry the DMRS, pilot overheads can be reduced.

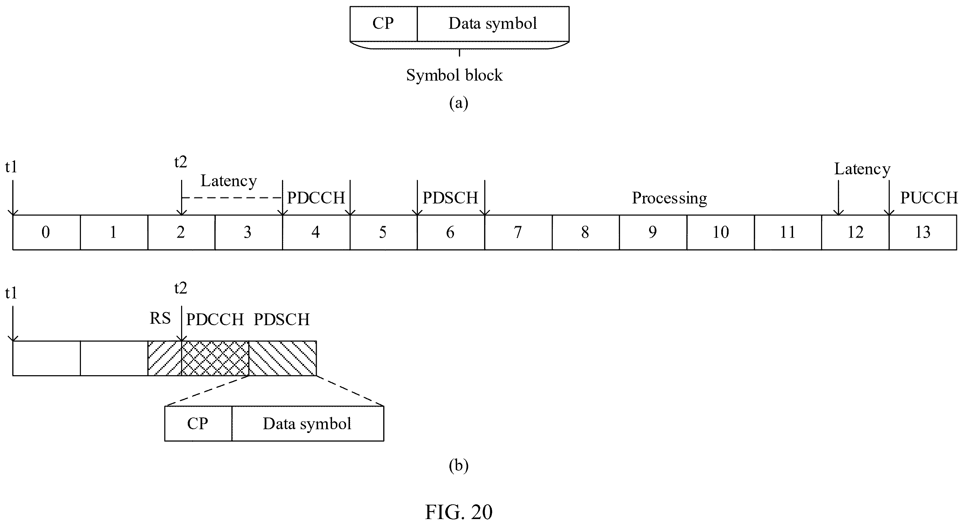

When the first channel is the first data channel,
optionally, the first data channel may carry a CP and a data symbol, or the first data channel may carry a data symbol. For example, as shown in (a) in FIG. 20, the CP and the data symbol may be collectively referred to as a symbol block (symbol block). In this case, a length of the symbol block may be a sum of a CP length and a length of the data symbol. In addition, it may be considered that the first data channel is transmitted by using the symbol block.

Optionally, the first communication apparatus may preconfigure a plurality of subcarrier spacings and/or a plurality of CP lengths for the first data channel. Then, a subcarrier spacing and/or a CP length that are/is actually used by the first data channel are/is indicated from the plurality of subcarrier spacings and/or the plurality of CP lengths. For example, the first communication apparatus may configure a plurality of subcarrier spacings and/or a plurality of CP lengths through RRC signaling or a MAC control element (control element, CE), and subsequently indicate a subcarrier spacing and/or a CP length that are/is actually used by the first data channel based on DCI or a third control channel.

Optionally, before step S1402, the communication method may further include: The first communication apparatus sends the third control channel, and correspondingly, the second communication apparatus receives the third control channel. The third control channel is used to schedule the first data channel.

For example, the first data channel may be a PDSCH, and the third control channel may be a PDCCH. The third control channel may be transmitted based on a communication mechanism in a conventional fixed frame structure. For example, a start time domain position of the third control channel may be located at a boundary of a time unit in the first frame structure. Alternatively, an implementation of the third control channel may be the same as that of the first control channel. For example, the start time domain position of the third control channel may be located at any moment.

Optionally, when the implementation of the third control channel is the same as that of the first control channel, the first communication apparatus may further send the first signal. For details, refer to the related descriptions. Details are not described herein again.

Optionally, after receiving the third control channel, the second communication apparatus may receive the first data channel based on the third control channel. For example, the second communication apparatus determines a start time domain position of the first data channel based on the start time domain position of the third control channel.

For the start time domain position of the first data channel,
in a possible implementation, an interval between an end time domain position of the third control channel and a start time domain position of the first data channel is 0. In other words, a time domain resource of the first data channel and a time domain resource of the third control channel are consecutive.

Based on the possible implementation, the first data channel can be sent immediately after the third control channel is sent, without waiting for the boundary of the time unit in the first frame structure. This reduces a communication latency. In addition, when the start time domain position of the third control channel is located at any moment, the first communication apparatus may immediately send the third control channel when the third control channel can be sent, and send the third control channel to schedule the first data channel, without waiting for the boundary of the time unit in the first frame structure to arrive or waiting for a time unit that is in the first frame structure and that is used for the third control channel to arrive. This reduces a communication latency.

For example, as shown in (b) in FIG. 20, an upper figure is a diagram of communication performed based on a communication mechanism of a conventional fixed frame structure, and a lower figure is a diagram of communication performed based on the method shown in FIG. 14. For example, the first signal is an RS, the first control channel is a PDCCH, the first data channel is a PDSCH, and the second control channel is a PUCCH. In the upper figure, it is assumed that time unit 0, time unit 4, time unit 8, and time unit 12 are used to transmit the PDCCH, time unit 6 is used to transmit the PDSCH, and time unit 13 is used to transmit the PUCCH. If data of the first communication apparatus arrives at the moment t1 and processing is completed at the moment t2, because a time unit in which the moment t2 is located is not used to transmit the PDCCH, the first communication apparatus needs to wait until a time unit used to transmit the PDCCH arrives, and then send the PDCCH to schedule the PDSCH. In addition, there is a time interval between the PDSCH and the PDCCH.

In the lower figure, the RS may be transmitted at any moment, an interval between a start time domain position of the PDCCH and an end time domain position of the RS may be 0, and an interval between a start time domain position of the PDSCH and an end time domain position of the PDCCH may be 0. Therefore, the first communication apparatus may send the RS when processing is about to be completed, immediately send, after the RS, the PDCCH to schedule the PDSCH, and send the PDSCH immediately after the PDCCH. This reduces a waiting latency of the PDCCH and the PDSCH, and further reduces a communication latency.

In another possible implementation, the third control channel carries first information, and the first information may indicate the start time domain position of the first data channel. For example, the first information may be DCI.

In an example, the first information indicates a quantity of time units by which a start time domain position of the first data channel is offset relative to the time domain resource of the third control channel. The offset time unit may be a time unit by which the start time domain position (or a start time unit) of the first data channel is offset relative to the end time domain position (or an end time unit) of the third control channel; or may be a time unit by which the start time domain position (or a start time unit) of the first data channel is offset relative to the start time domain position (or a start time unit) of the third control channel.

Optionally, the offset time unit may be a time unit corresponding to the first subcarrier spacing. In other words, the start time domain position of the first data channel may be indicated by the first subcarrier spacing or the time unit corresponding to the first subcarrier spacing as a reference point. Alternatively, the offset time unit may be a time unit corresponding to the second subcarrier spacing. In other words, the start time domain position of the first data channel may be indicated by the second subcarrier spacing or the time unit corresponding to the second subcarrier spacing as a reference point.

For example, when the first subcarrier spacing is used as the reference point to indicate the start time domain position of the first data channel, the first information may indicate that the start time domain position of the first data channel is offset by X time units relative to the time domain resource of the third control channel. When the second subcarrier spacing is used as the reference point to indicate the start time domain position of the first data channel, the first information may indicate that the start time domain position of the first data channel is offset by Y time units relative to the time domain resource of the third control channel. Because the second subcarrier spacing may be greater than the first subcarrier spacing, and a length of the time unit corresponding to the second subcarrier spacing is less than a length of the time unit corresponding to the first subcarrier spacing, when absolute time by which the start time domain position of the first data channel is offset relative to the time domain resource of the third control channel is fixed, Y is greater than X.

In another example, the first information indicates duration by which the start time domain position of the first data channel is offset relative to the time domain resource of the third control channel. The duration may be understood as absolute duration. A unit of the duration may be microsecond (µs), nanosecond (ns), millisecond (ms), or the like.

Optionally, the first information may be carried through a first field, and a size of the first field may be 2 bits or 3 bits, or certainly may be another size. A value of the first field may indicate a start time domain position of the first data channel. For example, the time unit is an OFDM symbol, and the unit of the duration is ms. A relationship between the value of the first field and the start time domain position of the first data channel may include at least one row and/or at least one column in Table 1, Table 2, or Table 3.

**Table 1**

| Value of the first field (or referred to as an offset indication (Offset indication)) | Duration by which the start time domain position of the first data channel is offset relative to the time domain resource of the first control channel | Quantity of OFDM symbols by which the start time domain position of the first data channel is offset relative to the time domain resource of the first control channel |
|---|---|---|
| 000 | 0.16 ms | 4 |
| 001 | 0.25 ms | 7 |
| 010 | 0.36 ms | 10 |
| 011 | 0.48 ms | 12 |
| 100 | 0.6 ms | 14 |
| 101 | 0.75 ms | 16 |
| 110 | 0.85 ms | 18 |
| 111 | 1 ms | 20 |

**Table 2**

| Value of the first field (or referred to as an offset indication (Offset indication)) | Duration by which the start time domain position of the first data channel is offset relative to the time domain resource of the first control channel | Quantity of OFDM symbols by which the start time domain position of the first data channel is offset relative to the time domain resource of the first control channel |
|---|---|---|
| 00 | 0.07 ms | 2 |
| 01 | 0.17 ms | 4 |
| 10 | 0.27 ms | 7 |
| 11 | 0.5 ms | 14 |

**Table 3**

| Value of the first field (or referred to as an offset indication (Offset indication)) | Duration by which the start time domain position of the first data channel is offset relative to the time domain resource of the first control channel | Quantity of OFDM symbols by which the start time domain position of the first data channel is offset relative to the time domain resource of the first control channel |
|---|---|---|
| 00 | 0.03 ms | 0 |
| 01 | 0.1 ms | 2 |
| 10 | 0.17 ms | 4 |
| 11 | 0.25 ms | 7 |

Optionally, in addition to the first information, the third control channel may carry information indicating at least one of the following: the length of the data symbol carried on the first data channel, a modulation scheme and/or a code rate of the first data channel, the subcarrier spacing and/or the CP length of the first data channel, the time domain resource of the first data channel, a frequency domain resource of the first data channel, and the like. Certainly, the at least one item may alternatively be defined in a protocol. This is not specifically limited in this application.

Optionally, the first communication apparatus may not send the third control channel and the first signal, and directly send the first data channel after the data arrives and processing is completed, to further reduce a latency. In this scenario, the second communication apparatus performs blind detection on the first data channel.

Optionally, the first data channel may carry a DMRS, or may not carry a DMRS. The DMRS is used for channel estimation or demodulation of the first data channel. When the first data channel does not carry the DMRS, and the first communication apparatus sends the first signal or the third control channel, a DMRS in the first signal or the third control channel may be further used for channel estimation of the first data channel. In other words, the channel estimation of the first data channel may be performed based on the DMRS in the first signal or the third control channel. In this scenario, because the first data channel does not need to carry the DMRS, pilot overheads can be reduced. In addition, in comparison with a case in which the first data channel carries the DMRS and the channel estimation of the first data channel is performed based on the DMRS carried in the first data channel, in this case, the DMRS of the first signal or the third control channel is reused for the channel estimation of the first data channel, so that the channel estimation of the first data channel can be performed in advance. Therefore, a channel estimation latency of the first data channel can be reduced.

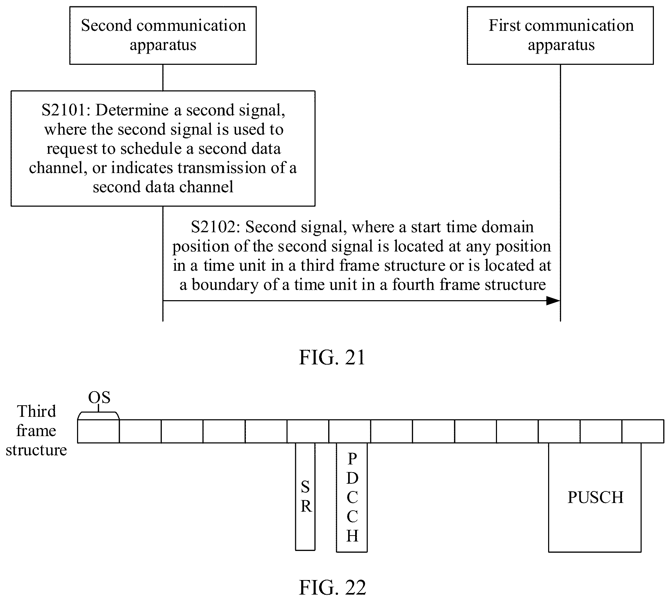

The foregoing method is mainly described by using a scenario in which the first communication apparatus sends data. In addition, this application further provides a communication method, applicable to a scenario in which a second communication apparatus has a data sending requirement. As shown in FIG. 21, the communication method includes the following steps.

S2101: The second communication apparatus determines a second signal.

The second signal is used to request (a first communication apparatus) to schedule a second data channel. In this case, it may be understood as grant-based second data channel transmission. Alternatively, the second signal indicates transmission of a second data channel. In this case, it may be understood as grant-free second data channel transmission. For example, the second signal may be a scheduling request (scheduling request, SR) or a reference signal (reference signal, RS).

Optionally, the second signal may be a simple signal generated based on a ZC sequence, an M sequence, a Gold sequence, or the like. The second signal may be scrambled by using an RNTI or a group RNTI of the second communication apparatus.

Optionally, the second data channel is a physical layer channel. For example, the second data channel may be a PUSCH, or the second data channel may be a physical transmission link shared channel (physical transmission link shared channel, PTxSCH). It may be considered that the PTxSCH is described from a perspective of a terminal device. For the terminal device, a function of the PTxSCH is similar to that of the PUSCH, and the PTxSCH may be a newly introduced physical layer data channel in a future evolved mobile communication system, for example, a 6G mobile communication system. Certainly, in the 6G system, the PUSCH may still be used to represent a physical uplink data channel or a physical transmission link data channel of the terminal device.

S2102: The second communication apparatus sends the second signal, and correspondingly, the first communication apparatus receives the second signal, where a start time domain position of the second signal may be located at any moment. In other words, the second signal may be transmitted at any moment.

In a first possible implementation, the start time domain position of the second signal is located at any position in a time unit in a third frame structure. In other words, the start time domain position of the second signal has an offset relative to a boundary of the time unit in the third frame structure.

The third frame structure is a frame structure corresponding to a third subcarrier spacing, and the third subcarrier spacing is a subcarrier spacing of the second data channel. Therefore, it may also be considered that the third frame structure is a frame structure of the second data channel. For details, refer to the related descriptions that the first subcarrier spacing is the subcarrier spacing of the first data channel and the first frame structure is the frame structure of the first data channel in step S802. Details are not described herein again.

For example, the time unit is an OFDM symbol, and the second signal is an SR. As shown in FIG. 22, the start time domain position of the SR may be located at any position in the OFDM symbol in the third frame structure.

In a second possible implementation, the start time domain position of the second signal is located at a boundary of a time unit in a fourth frame structure. The fourth frame structure is a frame structure corresponding to a fourth subcarrier spacing. The fourth subcarrier spacing is greater than the third subcarrier spacing. For the third subcarrier spacing, refer to the related descriptions in the first possible implementation. Details are not described herein again.

Optionally, because the fourth subcarrier spacing is greater than the third subcarrier spacing, a length of the time unit in the fourth frame structure is less than a length of the time unit in the third frame structure. Therefore, the start time domain position of the second signal being aligned with the boundary of the time unit in the fourth frame structure requires shorter waiting time in comparison with alignment with the boundary of the time unit in the third frame structure.

Optionally, that the first communication apparatus receives the second signal may include: The first communication apparatus performs blind detection based on an RNTI or a group RNTI of the second communication apparatus. A signal that is successfully decoded based on the RNTI or the group RNTI may be understood as the second signal.

Based on this solution, because the start time domain position of the second signal may be located at any position in the time unit in the third frame structure, after data of the second communication apparatus arrives, the second communication apparatus may immediately send the second signal to request to schedule the second data channel or indicate transmission of the second data channel, without waiting for the boundary of the time unit in the third frame structure to arrive. Therefore, a transmission moment can be flexibly determined, a waiting latency in a transmission process can be reduced, and a communication latency can be reduced.

Alternatively, the start time domain position of the second signal may be located at the boundary of the time unit in the fourth frame structure. The fourth subcarrier spacing is greater than the third subcarrier spacing, and the length of the time unit in the fourth frame structure is less than the length of the time unit in the third frame structure. Therefore, in comparison with alignment with the boundary of the time unit in the third frame structure, the start time domain position of the second signal being aligned with the boundary of the time unit in the fourth frame structure requires shorter waiting time. In this way, the communication apparatus can flexibly determine a transmission moment, waiting time in a transmission process can be reduced, and a latency can be reduced.

Optionally, after detecting the second signal, the first communication apparatus may learn that the second communication apparatus has the data sending requirement, and then perform the following step S2103.

S2103: The first communication apparatus performs communication based on the second signal.

In a first possible implementation, when the second signal is used to request to schedule the second data channel, performing communication based on the second signal includes: sending a fourth control channel, where the fourth control channel is used to schedule the second data channel. Correspondingly, the second communication apparatus receives the fourth control channel. For example, the fourth control channel may be a PDCCH or a PRxCCH.

Optionally, the fourth control channel may be transmitted at any moment. For example, a start time domain position of the fourth control channel may be located at any position in a time unit in the third frame structure, or a start time domain position of the fourth control channel may be located at a boundary of a time unit in the fourth frame structure. For the third frame structure and the fourth frame structure, refer to the related descriptions in step S2102. Details are not described herein again.

Based on the possible implementation, because the fourth control channel may be transmitted at any moment, after the second signal is detected and processed, the first communication apparatus may immediately send the fourth control channel to schedule the second data channel. This reduces a waiting latency of the fourth control channel, and further reduces a latency in a communication process.

Optionally, before the fourth control channel, the first communication apparatus may further send a third signal. The third signal may be transmitted at any moment. The third signal is used to determine detection time of the fourth control channel, or the third signal is used to trigger the fourth control channel, or the third signal indicates existence of the fourth control channel, or the third signal is used to determine the start time domain position of the fourth control channel. For a relationship between a time domain position of the third signal and a time domain position of the fourth control channel, refer to the related descriptions of a relationship between a time domain position of the first signal and a time domain position of the first control channel in the method shown in FIG. 14. Details are not described herein again.

In other words, after detecting the second signal, the first communication apparatus may send the fourth control channel to schedule the second data channel. Optionally, the third signal may be further sent before the fourth control channel, for the second communication apparatus to determine the detection time of the fourth control channel.

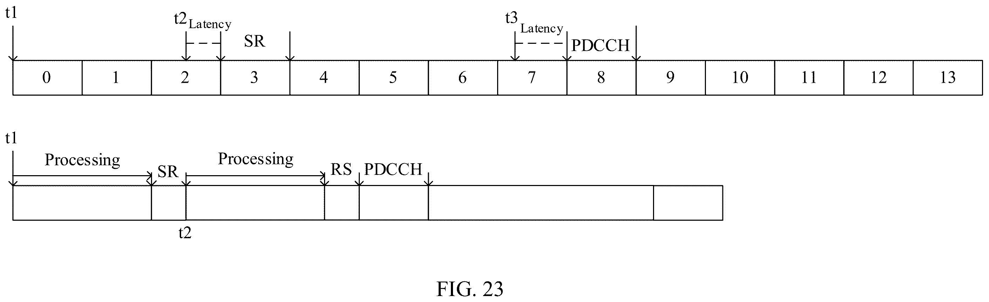

For example, as shown in FIG. 23, an upper figure is a diagram of communication performed based on a communication mechanism of a conventional fixed frame structure, and a lower figure is a diagram of communication performed based on the method shown in FIG. 21. For example, the second signal is an SR, the fourth control channel is a PDCCH, the second data channel is a PDSCH, and the third signal is an RS. In the upper figure, it is assumed that time unit 0, time unit 2, time unit 4, time unit 6, and time unit 8 are used to transmit the PDCCH, and time unit 3 is used to transmit the SR. If data of the second communication apparatus arrives at a moment t1 and processing is completed at a moment t2, because a time unit in which the moment t2 is located is not used to transmit the SR, the second communication apparatus needs to wait until the time unit used to transmit the SR arrives, and then send the SR to request to schedule the PDSCH. In addition, after the first communication apparatus receives the SR and processes the SR at a moment t3, because a time unit in which the moment t3 is located is not used to transmit the PDCCH, the first communication apparatus needs to wait until time unit 8 arrives, and then send the PDCCH.

In the lower figure, because the SR may be transmitted at any moment, the second communication apparatus may send the SR when the data arrives and processing is about to be completed. In addition, because the third signal and the fourth control channel may be transmitted at any moment, the first communication apparatus sends the RS when the SR is received and processing is about to be completed, and immediately sends the PDCCH after the RS. This reduces a waiting latency of the SR and the PDCCH, and further reduces a communication latency.

Optionally, after receiving the fourth control channel, the second communication apparatus may send the second data channel based on scheduling of the fourth control channel. Correspondingly, the first communication apparatus receives the second data channel. A start time domain position of the second data channel may be located at any position in a time unit in the third frame structure, or may be located at a boundary of a time unit in the fourth frame structure.

Optionally, an interval between an end time domain position of the fourth control channel and the start time domain position of the second data channel is 0. In other words, a time domain resource of the second data channel and a time domain resource of the fourth control channel are consecutive.

Alternatively, the fourth control information carries second information, and the second information may indicate the start time domain position of the second data channel. For example, the second information may be DCI.

In an example, the second information indicates a quantity of time units by which the start time domain position of the second data channel is offset relative to the time domain resource of the fourth control channel. The offset time unit may be a time unit by which the start time domain position (or a start time unit) of the second data channel is offset relative to the end time domain position (or an end time unit) of the fourth control channel; or may be a time unit by which the start time domain position (or a start time unit) of the second data channel is offset relative to the start time domain position (or a start time unit) of the fourth control channel.

Optionally, the offset time unit may be a time unit corresponding to the third subcarrier spacing. In other words, the start time domain position of the second data channel may be indicated by the third subcarrier spacing or the time unit corresponding to the third subcarrier spacing as a reference point. Alternatively, the offset time unit may be a time unit corresponding to the fourth subcarrier spacing. In other words, the start time domain position of the first data channel may be indicated by the fourth subcarrier spacing or the time unit corresponding to the fourth subcarrier spacing as a reference point. For details, refer to the related descriptions of indicating the start time domain position of the first data channel by the first information. Details are not described herein again.

In another example, the second information indicates duration by which the start time domain position of the second data channel is offset relative to the time domain resource of the fourth control channel. The duration may be understood as absolute duration. A unit of the duration may be microsecond (µs), nanosecond (ns), millisecond (ms), or the like.

Optionally, the second information may be carried through a second field, and a size of the second field may be 2 bits or 3 bits, or certainly may be another size. A value of the second field may indicate a start time domain position of the second data channel. For example, the time unit is an OFDM symbol, and the unit of the duration is ms. A relationship between the value of the second field and the start time domain position of the second data channel may be the same as the relationship between the value of the first field and the start time domain position of the first data channel. For details, refer to the related descriptions in Table 1 to Table 3. Details are not described herein again. Certainly, there may be another correspondence between the value of the second field and the start time domain position of the second data channel. This is not specifically limited in this application.

Optionally, in addition to the second information, the fourth control channel may carry information indicating at least one of the following: a length of a data symbol carried on the second data channel, a modulation scheme and/or a code rate of the second data channel, the subcarrier spacing and/or a CP length of the second data channel, the time domain resource of the second data channel, a frequency domain resource of the second data channel, and the like. Certainly, the at least one item may alternatively be defined in a protocol. This is not specifically limited in this application.

In a second possible implementation, when the second signal indicates transmission of the second data channel, that the first communication apparatus performs communication based on the second signal includes: The first communication apparatus receives the second data channel.

Optionally, in the second possible implementation, a start time domain position of the second data channel may be located at any position in a time unit in the third frame structure, or may be located at a boundary of a time unit in the fourth frame structure. For example, an interval between the start time domain position of the second data channel and an end time domain position of the second signal is 0. In other words, a time domain resource of the second data channel and a time domain resource of the second signal are consecutive. That is, the second communication apparatus may immediately send the second data channel after the second signal, without waiting for a boundary of a time unit in the first frame structure to arrive.

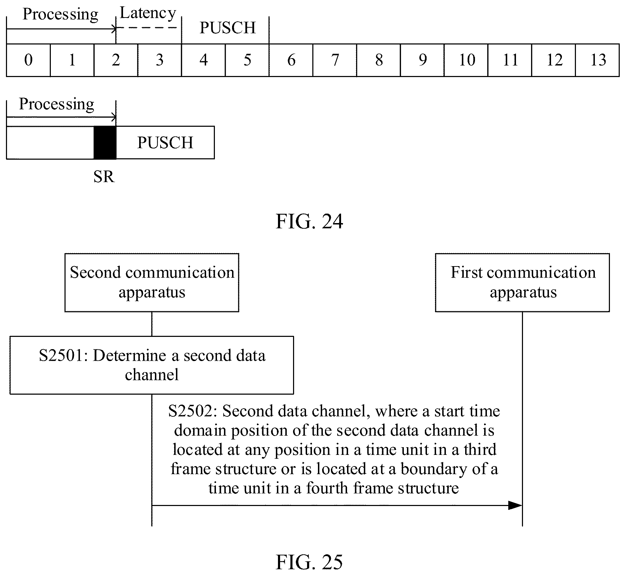

For example, as shown in FIG. 24, an upper figure is a diagram of communication performed based on a communication mechanism of a conventional fixed frame structure, and a lower figure is a diagram of communication performed based on the method shown in FIG. 21. For example, the second signal is an RS, and the second data channel is a PDSCH. In the upper figure, it is assumed that time unit 5 and time unit 6 are used to transmit a PUSCH. After data of the second communication apparatus arrives and is processed, the second communication apparatus needs to wait for a period of time, and then sends the PUSCH after a time unit used to transmit the PUSCH arrives. In the lower figure, when data of the second communication apparatus arrives and processing is about to be completed, the second communication apparatus may send the RS, and then send the PUSCH after the RS. This reduces a waiting latency of the PUSCH, and further reduces a communication latency.

In addition to the method shown in FIG. 21, this application further provides a communication method in a scenario in which a second communication apparatus has a data sending requirement. As shown in FIG. 25, the communication method includes the following steps.

S2501: The second communication apparatus determines a second data channel. For the second data channel, refer to the related descriptions in the method shown in FIG. 21. Details are not described herein again.

S2502: The second communication apparatus sends the second data channel, and correspondingly, a first communication apparatus receives the second data channel.

A start time domain position of the second data channel may be located at any moment. In other words, the second data channel may be transmitted at any moment.

For example, a time unit is an OFDM symbol, and the second data channel is a PUSCH. As shown in FIG. 22, a start time domain position of the PUSCH may be located at any position in an OFDM symbol in a third frame structure.

In a possible implementation, the start time domain position of the second data channel is located at any position in a time unit in the third frame structure. For example, the time unit is an OFDM symbol, and the second data channel is a PUSCH. As shown in FIG. 22, a start time domain position of the PUSCH may be located at any position in an OFDM symbol in the third frame structure.

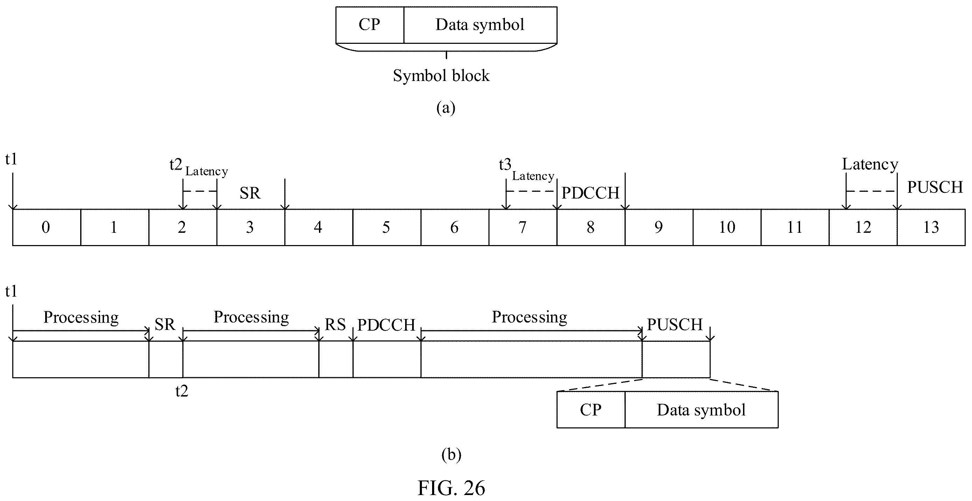

In a second possible implementation, a start time domain position of the second data channel is located at a boundary of a time unit in a fourth frame structure. For details, refer to the related descriptions in step S2102. Details are not described herein again.
optionally, the second data channel may carry a CP and a data symbol, or the second data channel may carry a data symbol. For example, as shown in (a) in FIG. 26, the CP and the data symbol may be collectively referred to as a symbol block (symbol block). In this case, a length of the symbol block may be a sum of a CP length and a length of the data symbol. In addition, it may be considered that the second data channel is transmitted by using the symbol block.

Optionally, the first communication apparatus may preconfigure a plurality of subcarrier spacings and/or a plurality of CP lengths for the second data channel. Then, a subcarrier spacing and/or a CP length that are/is actually used by the second data channel are/is indicated from the plurality of subcarrier spacings and/or the plurality of CP lengths. For details, refer to the related descriptions described when the first channel is the first data channel. Details are not described herein again.

Based on the solution, because the start time domain position of the second data channel may be located at any position in the time unit in the third frame structure, the second communication apparatus can send the second data channel without waiting for a boundary of the time unit in the third frame structure to arrive. This reduced a waiting latency in a transmission process.

Alternatively, the start time domain position of the second data channel may be located at the boundary of the time unit in the fourth frame structure. A length of the time unit in the fourth frame structure is less than a length of the time unit in the third frame structure. Therefore, in comparison with alignment with the boundary of the time unit in the third frame structure, the start time domain position of the second data channel being aligned with the boundary of the time unit in the fourth frame structure requires shorter waiting time. In this way, the communication apparatus can flexibly determine a transmission moment, waiting time in a transmission process can be reduced, and a latency can be reduced.
optionally, before step S2502, the communication method may further include: The second communication apparatus sends a second signal, and correspondingly, the first communication apparatus receives the second signal. For a function of the second signal and a start time domain position of the second signal, refer to the related descriptions in step S2101 and step S2102. Details are not described herein again.

When the second signal is used to request to schedule the second data channel,
before step S2502, the communication method may further include: The first communication apparatus sends a fourth control channel, and correspondingly, the second communication apparatus receives the fourth control channel. The fourth control channel is used to schedule the second data channel.

Optionally, before the fourth control channel, the first communication apparatus may further send a third signal. For the fourth control channel and the third signal, refer to the related descriptions in step S2103. Details are not described herein again.

For example, based on the example shown in FIG. 23, as shown in (b) in FIG. 26, in an upper figure, after receiving and processing a PDCCH, the second communication apparatus needs to wait until a time unit used to transmit a PUSCH arrives, and then sends the PUSCH. In a lower figure, because the start time domain position of the second data channel may be located at any moment, after receiving and processing a PDCCH, the second communication apparatus may send a PUSCH. This reduces a waiting latency of the PUSCH.

Optionally, an interval between an end time domain position of the fourth control channel and the start time domain position of the second data channel is 0. In other words, a time domain resource of the second data channel and a time domain resource of the fourth control channel are consecutive. Alternatively, the fourth control information carries second information, and the second information may indicate the start time domain position of the second data channel. For example, the second information may be DCI. For implementation of the fourth control channel and the second information, refer to the related descriptions in step S2103. Details are not described herein again.

When the second signal indicates transmission of the second data channel,
optionally, an interval between the start time domain position of the second data channel and an end time domain position of the second signal is 0. In other words, a time domain resource of the second data channel and a time domain resource of the second signal are consecutive. That is, the second communication apparatus may immediately send the second data channel after the second signal, without waiting for a boundary of a time unit in a first frame structure to arrive.

Optionally, a size of the time domain resource of the second data channel may be predefined in a protocol, or may be configured by the first communication apparatus. This is not specifically limited in this application.

Optionally, a frequency domain resource of the second data channel may be predefined in a protocol, or may be configured by the first communication apparatus, or may be determined based on a frequency domain resource of the second signal. For example, the frequency domain resource of the second data channel may be the same as the frequency domain resource of the second signal. Alternatively, a center frequency of the frequency domain resource of the second data channel is the same as a center frequency of the frequency domain resource of the second signal. Alternatively, the frequency domain resource of the second data channel may include the frequency domain resource of the second signal.

Optionally, there is a correspondence between a third parameter and a fourth parameter. The third parameter includes at least one of the following: a third subcarrier spacing, a CP length corresponding to the third subcarrier spacing, a time-frequency resource position of the second signal, a scrambling identifier of the second signal, or a root value of a second reference sequence. The fourth parameter includes at least one of the following: a fourth subcarrier spacing, a CP length corresponding to the fourth subcarrier spacing, or a time-frequency resource position of the second data channel.

Optionally, the second reference sequence is used to generate the second signal, and the first reference sequence may be, for example, a ZC sequence, an M sequence, or a Gold sequence. The root value of the second reference sequence is used to determine the second reference sequence. The scrambling identifier of the second signal may be an RNTI or a group RNTI of the second communication apparatus.

Optionally, the time-frequency resource position of the second signal may be a position of an RE in which the second signal is located, or may be a position of the time domain resource and/or the frequency domain resource. The time-frequency resource position of the second data channel may be the time domain resource and/or the frequency domain resource. For example, the time domain resource may include an OFDM symbol, a mini-slot, a slot, a subframe, or the like. The frequency domain resource may include an RB, an RBG, a center frequency, a bandwidth, or the like.

In a first example, the correspondence between the third parameter and the fourth parameter may specifically include: One scrambling identifier of the second signal corresponds to one fourth subcarrier spacing or a CP length corresponding to the fourth subcarrier spacing, or one root value of the second reference sequence corresponds to one fourth subcarrier spacing or a CP length corresponding to the fourth subcarrier spacing. For details, refer to the related descriptions of the first example in the correspondence between the first parameter and the second parameter. Details are not described herein again.

In a second example, the correspondence between the third parameter and the fourth parameter may specifically include: A position of an RE in which the second signal is located may correspond to one fourth subcarrier spacing or a CP length corresponding to the fourth subcarrier spacing. For details, refer to the related descriptions of the second example in the correspondence between the first parameter and the second parameter. Details are not described herein again.

Optionally, in the first example and the second example, the fourth subcarrier spacing may be understood as a subcarrier spacing actually used by the second data channel. Therefore, the fourth subcarrier spacing herein may also be replaced with a subcarrier spacing of the second data channel.

In a third example, the correspondence between the third parameter and the fourth parameter may specifically include: One time domain resource of the second signal may correspond to one time domain resource of the second data channel, and/or one frequency domain resource of the second signal may correspond to one frequency domain resource of the second data channel. For details, refer to the related descriptions of the third example in the correspondence between the first parameter and the second parameter. Details are not described herein again.

Optionally, the second communication apparatus may not send the second signal, and directly send the second data channel after the data arrives and processing is completed, to further reduce a latency. In this scenario, the first communication apparatus performs blind detection on the second data channel.

Optionally, the second data channel may carry a DMRS, or may not carry a DMRS. The DMRS is used for channel estimation or demodulation of the second data channel. When the second data channel does not carry the DMRS, and the first communication apparatus sends the second signal, the second signal may be further used for the channel estimation of the second data channel. In other words, the channel estimation of the second data channel may be performed based on the second signal. In this scenario, because the second data channel does not need to carry the DMRS, pilot overheads can be reduced. In addition, in comparison with a case in which the second data channel carries the DMRS and the data channel estimation of the second data channel is performed based on the DMRS carried in the second data channel, in this case, the second signal is reused for the channel estimation of the second data channel, so that the channel estimation of the second data channel can be performed in advance. Therefore, a channel estimation latency of the second data channel can be reduced.

Optionally, the correspondence between the third parameter and the fourth parameter may be defined in a protocol, or may be configured by the first communication apparatus. For example, the first communication apparatus may configure the correspondence between the third parameter and the fourth parameter in a system message or an RRC message. This is not specifically limited in this application.

It may be understood that, in the foregoing embodiments, the methods and/or steps implemented by the first communication apparatus may alternatively be implemented by a component (for example, a processor, a chip, a chip system, a circuit, a logic module, or software) that can be used in the first communication apparatus. The methods and/or steps implemented by the second communication apparatus may alternatively be implemented by a component (for example, a processor, a chip, a chip system, a circuit, a logic module, or software) that can be used in the second communication apparatus. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In an actual implementation, another division manner may be used.

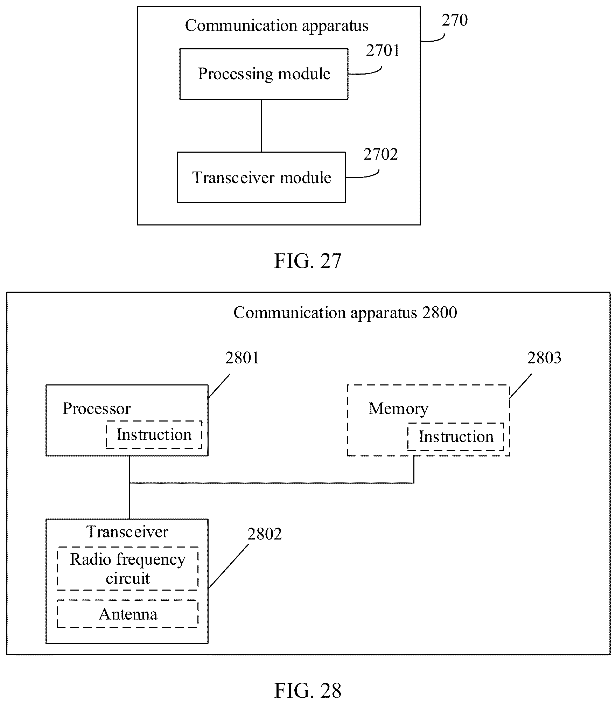

FIG. 27 is a diagram of a structure of a communication apparatus 270. The communication apparatus 270 includes a processing module 2701 and a transceiver module 2702. The communication apparatus 270 may be configured to implement a function of the first communication apparatus or the second communication apparatus.

In some embodiments, the communication apparatus 270 may further include a storage module (which is not shown in FIG. 27), configured to store program instructions and data.

In some embodiments, the transceiver module 2702 may also be referred to as a transceiver unit, configured to implement a sending function and/or a receiving function. The transceiver module 2702 may include a transceiver circuit, a transceiver machine, a transceiver, or a communication interface.

In some embodiments, the transceiver module 2702 may include a receiving module and a sending module, respectively configured to perform receiving and sending steps performed by the first communication apparatus or the second communication apparatus in the foregoing method embodiments, and/or configured to support another process of the technology described in this specification. The processing module 2701 may be configured to perform processing (for example, determining and validation) steps performed by the first communication apparatus or the second communication apparatus in the foregoing method embodiments, and/or configured to support another process of the technology described in this specification.

When the communication apparatus 270 is configured to implement the functions of the first communication apparatus or the second communication apparatus, in a possible implementation,
the processing module 2701 is configured to determine an information block, where the information block includes at least two of the following: a first reference signal, a first control channel, a first data channel, a second reference signal, or a second control channel, the first reference signal is used to determine detection time of the first control channel, the first control channel is used to schedule the first data channel, the second reference signal is used to demodulate the first data channel, and the second control channel is used to feed back whether the first data channel is successfully received. The transceiver module 2702 is configured to perform communication based on the information block, where a start time domain position of the information block is located at any position in a time unit in a first frame structure, or a start time domain position of the information block is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

When the communication apparatus 270 is configured to implement the functions of the first communication apparatus, in a possible implementation,
the processing module 2701 is configured to determine a first channel, where the first channel is a first control channel or a first data channel, and the first control channel is used to schedule the first data channel. The transceiver module 2702 is configured to send the first channel, where a start time domain position of the first channel is located at any position in a time unit in a first frame structure, or a start time domain position of the first channel is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

Optionally, when the first channel is the first control channel, the transceiver module 2702 is further configured to send a first signal, where the first signal is used to determine detection time of the first control channel, and a start time domain position of the first signal is located at any position in a time unit in the first frame structure, or a start time domain position of the first signal is located at a boundary of a time unit in the second frame structure.

Optionally, when the first channel is the first data channel, the transceiver module 2702 is further configured to send a third control channel, where the third control channel is used to schedule the first data channel.

When the communication apparatus 270 is configured to implement the functions of the second communication apparatus, in a possible implementation,
the transceiver module 2702 is configured to receive a first channel, where the first channel is a first control channel or a first data channel, the first control channel is used to schedule the first data channel, a start time domain position of the first channel is located at any position in a time unit in a first frame structure, or a start time domain position of the first channel is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel. The transceiver module 2702 is further configured to perform communication based on the first channel.

Optionally, when the first channel is the first control channel, the transceiver module 2702 is specifically configured to receive the first data channel based on the first control channel.

Optionally, when the first channel is the first control channel, the transceiver module 2702 is further configured to receive a first signal, where the first signal is used to determine detection time of the first control channel, and a start time domain position of the first signal is located at any position in a time unit in the first frame structure, or a start time domain position of the first signal is located at a boundary of a time unit in the second frame structure. Receiving the first channel includes: receiving the first control channel based on the first signal.

Optionally, when the first channel is the first data channel, the transceiver module 2702 is specifically configured to send feedback information, where the feedback information is used to feed back whether the first data channel is successfully received.

Optionally, when the first channel is the first data channel, the transceiver module 2702 is further configured to receive a third control channel, where the third control channel is used to schedule the first data channel. That the transceiver module 2702 is configured to receive the first channel includes: The transceiver module 2702 is configured to receive the first data channel based on the third control channel.

When the communication apparatus 270 is configured to implement the functions of the second communication apparatus, in another possible implementation,
the processing module 2701 is configured to determine a second signal, where the second signal is used to request to schedule a second data channel, or the second signal indicates transmission of a second data channel. The transceiver module 2702 is configured to send the second signal, where a start time domain position of the second signal is located at any position in a time unit in a third frame structure, or a start time domain position of the second signal is located at a boundary of a time unit in a fourth frame structure, the third frame structure is a frame structure corresponding to a third subcarrier spacing, the fourth frame structure is a frame structure corresponding to a fourth subcarrier spacing, and the fourth subcarrier spacing is greater than the third subcarrier spacing.

Optionally, the transceiver module 2702 is further configured to send the second data channel, where a start time domain position of the second data channel is located at any position in a time unit in the third frame structure, or a start time domain position of the second data channel is located at a boundary of a time unit in the fourth frame structure.

When the communication apparatus 270 is configured to implement the functions of the second communication apparatus, in still another possible implementation,
the processing module 2701 is configured to determine a second data channel. The transceiver module 2702 is configured to send the second data channel. A start time domain position of the second data channel is located at any position in a time unit in a third frame structure, or a start time domain position of the second data channel is located at a boundary of a time unit in a fourth frame structure, the third frame structure is a frame structure corresponding to a third subcarrier spacing, the fourth frame structure is a frame structure corresponding to a fourth subcarrier spacing, and the fourth subcarrier spacing is greater than the third subcarrier spacing.

Optionally, the transceiver module 2702 is further configured to send a second signal, where the second signal is used to request to schedule the second data channel, or the second signal indicates transmission of the second data channel. A start time domain position of the second signal is located at any position in a time unit in the third frame structure, or a start time domain position corresponding to the second signal is located at a boundary of a time unit in the fourth frame structure.

Optionally, the transceiver module 2702 is further configured to receive a fourth control channel. The fourth control channel is used to schedule the second data channel.

All related content of the steps in the foregoing method embodiments may be cited in function descriptions of the corresponding function modules. Details are not described herein again.

In this application, the communication apparatus 270 may be presented by dividing the functional modules through integration. The "module" herein may be an application-specific integrated circuit (application-specific integrated circuit, ASIC), a circuit, a processor and a memory that executes one or more software or firmware programs, an integrated logic circuit, and/or another component that can provide the foregoing functions.

In some embodiments, when the communication apparatus 270 in FIG. 27 is a chip or a chip system, a function/an implementation process of the transceiver module 2702 may be implemented through an input/output interface (or a communication interface) of the chip or the chip system, and a function/an implementation process of the processing module 2701 may be implemented by a processor (or a processing circuit) of the chip or the chip system.

The communication apparatus 270 provided in this embodiment can perform the foregoing method. Therefore, for technical effect that can be achieved by the communication apparatus 270, refer to the foregoing method embodiments. Details are not described herein again.

In a possible product form, the first communication apparatus or the second communication apparatus in embodiments of this application may be further implemented through the following: one or more field programmable gate arrays (field programmable gate arrays, FPGAs), a programmable logic device (programmable logic device, PLD), a controller, a state machine, gate logic, a discrete hardware component, any other suitable circuitry, or any combination of circuits capable of performing various functions described throughout this application.

In another possible product form, the first communication apparatus or the second communication apparatus in embodiments of this application may be implemented by using a general bus architecture. For ease of description, refer to FIG. 28. FIG. 28 is a diagram of a structure of a communication apparatus 2800 according to an embodiment of this application. The communication apparatus 2800 includes a processor 2801 and a transceiver 2802. The communication apparatus 2800 may be the first communication apparatus, or a chip or a chip system in the first communication apparatus. Alternatively, the communication apparatus 2800 may be the second communication apparatus, or a chip or a module in the second communication apparatus. FIG. 28 shows only main components of the communication apparatus 2800. In addition to the processor 2801 and the transceiver 2802, the communication apparatus may further include a memory 2803 and an input/output apparatus (not shown in the figure).

Optionally, the processor 2801 is mainly configured to: process a communication protocol and communication data, control the entire communication apparatus, execute a software program, and process data of the software program. The memory 2803 is mainly configured to store the software program and data. The transceiver 2802 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 2801, the transceiver 2802, and the memory 2803 may be connected through a communication bus.

After the communication apparatus is powered on, the processor 2801 may read a software program in the memory 2803, interpret and execute instructions of the software program, and process data of the software program. When needing to send data wirelessly, after performing baseband processing on the to-be-sent data, the processor 2801 outputs a baseband signal to a radio frequency circuit; and the radio frequency circuit performs radio frequency processing on the baseband signal and then transmits the radio frequency signal to the outside in an electromagnetic wave form through an antenna. When data is sent to the communication apparatus, the radio frequency circuit receives the radio frequency signal through the antenna, converts the radio frequency signal into a baseband signal, and outputs the baseband signal to the processor 2801. The processor 2801 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 270 may be in a form of the communication apparatus 2800 shown in FIG. 28.

In an example, functions/implementation processes of the processing module 2701 in FIG. 27 may be implemented by the processor 2801 in the communication apparatus 2800 shown in FIG. 28 by invoking the computer-executable instructions stored in the memory 2803. Functions/implementation processes of the transceiver module 2702 in FIG. 27 may be implemented by the transceiver 2802 in the communication apparatus 2800 shown in FIG. 28.

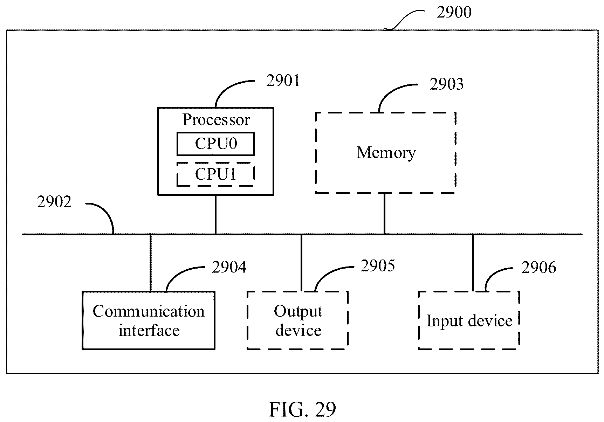

In still another possible product form, the first communication apparatus or the second communication apparatus in this application may use a composition structure shown in FIG. 29, or include components shown in FIG. 29. FIG. 29 is a composition diagram of a communication apparatus 2900 according to this application. The communication apparatus 2900 may be the second communication apparatus or a chip or a system on chip in the second communication apparatus. Alternatively, the communication apparatus 2900 may be the first communication apparatus or a module, a chip, or a system on chip in the first communication apparatus.

As shown in FIG. 29, the communication apparatus 2900 includes at least one processor 2901 and at least one communication interface (in FIG. 29, only an example in which one communication interface 2904 and one processor 2901 are included is used for description). Optionally, the communication apparatus 2900 may further include a communication bus 2902 and a memory 2903.

The processor 2901 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 2901 may be another apparatus with a processing function, for example, a circuit, a component, or a software module. This is not limited.

The communication bus 2902 is configured to connect different components of the communication apparatus 2900, to enable communication between different components. The communication bus 2902 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 29, but this does not mean that there is only one bus or only one type of bus.

The communication interface 2904 is configured to communicate with another device or a communication network. For example, the communication interface 2904 may be a module, a circuit, a transceiver, or any apparatus that can implement communication. Optionally, the communication interface 2904 may alternatively be an input/output interface located in the processor 2901, to implement signal input and signal output of the processor.

The memory 2903 may be an apparatus with a storage function, and is configured to store instructions and/or data. The instructions may be computer programs.

For example, the memory 2903 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a disk storage medium, or another magnetic storage device. This is not limited.

It should be noted that the memory 2903 may be independent of the processor 2901, or may be integrated with the processor 2901. The memory 2903 may be located inside the communication apparatus 2900, or may be located outside the communication apparatus 2900. This is not limited. The processor 2901 may be configured to execute the instructions stored in the memory 2903, to implement the method provided in the following embodiments of this application.

In an optional implementation, the communication apparatus 2900 may further include an output device 2905 and an input device 2906. The output device 2905 communicates with the processor 2901, and may display information in a plurality of manners. For example, the output device 2905 may be a liquid crystal display (liquid crystal display, LCD), a light emitting diode (light emitting diode, LED) display device, a cathode ray tube (cathode ray tube, CRT) display device, or a projector (projector). The input device 2906 communicates with the processor 2901, and may receive an input from a user in a plurality of manners. For example, the input device 2906 may be a mouse, a keyboard, a touchscreen device, or a sensor device.

In some embodiments, in terms of hardware implementation, a person skilled in the art may figure out that the communication apparatus 270 shown in FIG. 27 may be in a form of the communication apparatus 2900 shown in FIG. 29.

In an example, functions/implementation processes of the processing module 2701 in FIG. 27 may be implemented by the processor 2901 in the communication apparatus 2900 shown in FIG. 29 by invoking the computer-executable instructions stored in the memory 2903. Functions/implementation processes of the transceiver module 2702 in FIG. 27 may be implemented by the communication interface 2904 in the communication apparatus 2900 shown in FIG. 29.

It should be noted that the structure shown in FIG. 29 does not constitute a specific limitation on the first communication apparatus or the second communication apparatus. For example, in some other embodiments of this application, the first communication apparatus or the second communication apparatus may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations, or equivalents that cover the scope of this application. It is clearly that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A communication method, wherein the method comprises:
determining an information block, wherein the information block comprises at least two of the following: a first reference signal, a first control channel, a first data channel, a second reference signal, or a second control channel, the first reference signal is used to determine detection time of the first control channel, the first control channel is used to schedule the first data channel, the second reference signal is used to demodulate the first data channel, and the second control channel is used to feed back whether the first data channel is successfully received; and
performing communication based on the information block, wherein a start time domain position of the information block is located at any position in a time unit in a first frame structure, or a start time domain position of the information block is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

2. The method according to claim 1, wherein a frequency domain resource of the first reference signal, a frequency domain resource of the first control channel, and a frequency domain resource of the first data channel are the same;
or
a frequency domain resource of the first reference signal, a frequency domain resource of the first control channel, a frequency domain resource of the first data channel, and a frequency domain resource of the second control channel are the same.

3. The method according to claim 1 or 2, wherein a time domain resource of the first control channel and a time domain resource of the first data channel are consecutive;
or
a time domain resource of the first control channel and a time domain resource of the second reference signal are consecutive, and the time domain resource of the second reference signal and a time domain resource of the first data channel are consecutive.

4. The method according to claim 1, wherein a frequency domain resource of the first reference signal comprises a frequency domain resource of the first control channel and a frequency domain resource of the first data channel;
or
a frequency domain resource of the first reference signal is the same as a frequency domain resource of the first control channel.

5. The method according to claim 1 or 4, wherein a time domain resource of the first control channel is the same as a time domain resource of the first data channel;
or
a time domain resource of the first data channel comprises a time domain resource of the first control channel.

6. The method according to any one of claims 1 to 5, wherein a start time domain position of the first reference signal is the same as the start time domain position of the information block;
and/or
a time domain resource of the first reference signal and the time domain resource of the first control channel are consecutive.

7. The method according to any one of claims 1 to 6, wherein a time interval between the second control channel and the first data channel is greater than or equal to first duration, and the first duration is minimum processing duration corresponding to a processing capability of a receiving apparatus.

8. The method according to any one of claims 1 to 7, wherein there is a correspondence between a parameter of the first reference signal and the information block; and
the parameter of the first reference signal comprises at least one of the following: a time-frequency resource position of the first reference signal, a scrambling identifier of the first reference signal, or a root value of a reference sequence, wherein the reference sequence is used to generate the first reference signal, and the root value of the reference sequence is used to determine the reference sequence.

9. A communication method, wherein the method comprises:
determining a first channel, wherein the first channel is a first control channel or a first data channel, and the first control channel is used to schedule the first data channel; and
sending the first channel, wherein a start time domain position of the first channel is located at any position in a time unit in a first frame structure, or a start time domain position of the first channel is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel.

10. The method according to claim 9, wherein the first channel is the first control channel, and the method further comprises:
sending a first signal, wherein the first signal is used to determine detection time of the first control channel, and a start time domain position of the first signal is located at any position in a time unit in the first frame structure, or a start time domain position of the first signal is located at a boundary of a time unit in the second frame structure.

11. The method according to claim 10, wherein an interval between an end time domain position of the first signal and a start time domain position of the first control channel is 0;
or
a start time domain position of the first control channel is located at a start boundary of a 1^{st} time unit after the first signal, and the 1^{st} time unit is a time unit corresponding to the second subcarrier spacing.

12. The method according to claim 10 or 11, wherein there is a correspondence between a first parameter and a second parameter;
the first parameter comprises at least one of the following: the first subcarrier spacing, a cyclic prefix length corresponding to the first subcarrier spacing, a time-frequency resource position of the first signal, a scrambling identifier of the first signal, or a root value of a first reference sequence, wherein the first reference sequence is used to generate the first signal, and the root value of the first reference sequence is used to determine the first reference sequence; and
the second parameter comprises at least one of the following: the second subcarrier spacing, a cyclic prefix length corresponding to the second subcarrier spacing, or a time-frequency resource position of the first control channel.

13. The method according to any one of claims 10 to 12, wherein a frequency domain resource of the first signal is the same as a frequency domain resource of the first control channel; or
a center frequency of a frequency domain resource of the first signal is the same as a center frequency of a frequency domain resource of the first control channel; or
a frequency domain resource of the first signal comprises a frequency domain resource of the first control channel.

14. The method according to claim 9, wherein the first channel is the first data channel, and the method further comprises: sending a third control channel, wherein the third control channel is used to schedule the first data channel.

15. The method according to claim 14, wherein an interval between an end time domain position of the third control channel and a start time domain position of the first data channel is 0.

16. The method according to claim 14, wherein the third control channel carries first information;
the first information indicates a quantity of time units by which a start time domain position of the first data channel is offset relative to a time domain resource of the third control channel, and the time unit is a time unit corresponding to the first subcarrier or a time unit corresponding to the second subcarrier; or
the first information indicates duration by which a start time domain position of the first data channel is offset relative to a time domain resource of the third control channel.

17. A communication method, wherein the method comprises:
receiving a first channel, wherein the first channel is a first control channel or a first data channel, the first control channel is used to schedule the first data channel, a start time domain position of the first channel is located at any position in a time unit in a first frame structure, or a start time domain position of the first channel is located at a boundary of a time unit in a second frame structure, the first frame structure is a frame structure corresponding to a first subcarrier spacing, the second frame structure is a frame structure corresponding to a second subcarrier spacing, the second subcarrier spacing is greater than the first subcarrier spacing, and the first subcarrier spacing is a subcarrier spacing of the first data channel; and
performing communication based on the first channel.

18. The method according to claim 17, wherein the first channel is the first control channel; and
performing communication based on the first channel comprises: receiving the first data channel based on the first control channel.

19. The method according to claim 17 or 18, wherein the first channel is the first control channel, and the method further comprises:
receiving a first signal, wherein the first signal is used to determine detection time of the first control channel, and a start time domain position of the first signal is located at any position in a time unit in the first frame structure, or a start time domain position of the first signal is located at a boundary of a time unit in the second frame structure; and
receiving the first channel comprises: receiving the first control channel based on the first signal.

20. The method according to claim 19, wherein an interval between an end time domain position of the first signal and a start time domain position of the first control channel is 0;
or
a start time domain position of the first control channel is located at a start boundary of a 1^{st} time unit after the first signal, and the 1^{st} time unit is a time unit corresponding to the second subcarrier spacing.

21. The method according to claim 19 or 20, wherein there is a correspondence between a first parameter and a second parameter;
the first parameter comprises at least one of the following: the first subcarrier spacing, a cyclic prefix length corresponding to the first subcarrier spacing, a time-frequency resource position of the first signal, a scrambling identifier of the first signal, or a root value of a first reference sequence, wherein the first reference sequence is used to generate the first signal, and the root value of the first reference sequence is used to determine the first reference sequence; and
the second parameter comprises at least one of the following: the second subcarrier spacing, a cyclic prefix length corresponding to the second subcarrier spacing, or a time-frequency resource position of the first control channel.

22. The method according to any one of claims 19 to 21, wherein a frequency domain resource of the first signal is the same as a frequency domain resource of the first control channel; or
a center frequency of a frequency domain resource of the first signal is the same as a center frequency of a frequency domain resource of the first control channel; or
a frequency domain resource of the first signal comprises a frequency domain resource of the first control channel.

23. The method according to claim 17, wherein the first channel is the first data channel; and
performing communication based on the first channel comprises: sending feedback information, wherein the feedback information is used to feed back whether the first data channel is successfully received.

24. The method according to claim 17 or 23, wherein the first channel is the first data channel, and the method further comprises: receiving a third control channel, wherein the third control channel is used to schedule the first data channel; and
receiving the first channel comprises: receiving the first data channel based on the third control channel.

25. The method according to claim 24, wherein an interval between an end time domain position of the third control channel and a start time domain position of the first data channel is 0.

26. The method according to claim 24, wherein the third control channel carries first information;
the first information indicates a quantity of time units by which a start time domain position of the first data channel is offset relative to a time domain resource of the third control channel, and the time unit is a time unit corresponding to the first subcarrier or a time unit corresponding to the second subcarrier; or
the first information indicates duration by which a start time domain position of the first data channel is offset relative to a time domain resource of the third control channel.

27. A communication apparatus, wherein the apparatus comprises a module configured to perform the method according to any one of claims 1 to 26.

28. A communication apparatus, wherein the apparatus comprises a processor, and the processor is configured to run a computer program or instructions, to enable the apparatus to perform the method according to any one of claims 1 to 8, or to enable the apparatus to perform the method according to any one of claims 9 to 16, or to enable the apparatus to perform the method according to any one of claims 17 to 26.

29. A computer-readable storage medium, wherein the computer-readable storage medium stores computer instructions or a computer program, and when the computer instructions or the computer program is run on a communication apparatus, the method according to any one of claims 1 to 8 is performed, or the method according to any one of claims 9 to 16 is performed, or the method according to any one of claims 17 to 26 is performed.

30. A computer program product, wherein the computer program product comprises computer instructions; and when a part or all of the computer instructions are run, the method according to any one of claims 1 to 8 is performed, or the method according to any one of claims 9 to 16 is performed, or the method according to any one of claims 17 to 26 is performed.
